# EUROPÄISCHE PATENTSCHRIFT

(11) **EP 1 666 198 B1**
(45) Veröffentlichungstag und Bekanntmachung des Hinweises auf die Patenterteilung: **18.03.2009**
(21) Anmeldenummer: 05025914.2
(22) Anmeldetag: 28.11.2005
(51) Int. Cl.: B23Q 7/03, B23B 5/16

(54) **Fasmaschine und Verfahren zum Fasen von rohr- oder stangenartigen Werkstücken**
Bevelling machine and bevelling method for tubular or rod-shaped workpieces
Machine à chanfreiner et méthode de chanfreinage pour pièces tubulaires ou en forme de barre

(30) Priorität: 26.11.2004 DE 102004057297
(43) Veröffentlichungstag der Anmeldung: 07.06.2006
(73) Patentinhaber: Schumag AG, 52076 Aachen (DE)
(72) Erfinder: Kudrus, Heiner, 4700 Eupen (BE)
(74) Vertreter: Reuther, Martin

(56) Entgegenhaltungen:
- EP-A- 1 211 006
- DE-C- 625 218
- DE-U1- 20 119 820
- US-A- 5 465 471
- US-A- 6 109 151
- PATENT ABSTRACTS OF JAPAN Bd. 004, Nr. 003 (M-087), 11. Januar 1980 (1980-01-11) & JP 54 139179 A (HITACHI LTD), 29. Oktober 1979 (1979-10-29)

## Beschreibung

Die Erfindung betrifft eine Fasmaschine mit wenigstens einer Faseinrichtung zum Fasen von rohr- oder stangenartigen Werkstücken und mit einer Klemmeinrichtung zum Positionieren eines Werkstückes in einer Bearbeitungsposition. Auch betrifft die Erfindung ein Verfahren zum Fasen von rohr- und stangenartigen Werkstücken, bei welchem insbesondere die Werkstücke wenigstens einer Faseinrichtung zugeführt an den Werkstücken Fasen angefast und anschließend die angefasten Werkstücke von dem Faswerkzeug abgeführt werden.

Derartige Fasmaschinen sind aus dem Stand der Technik bekannt. Beispielsweise transportieren bekannte Fasmaschinen rohrartige oder stangenartige Werkstücke mittels eines Quertransportes zu einer ersten Positionierstelle, wo die Werkstücke in einer Null-Lage derart positioniert und fixiert werden, dass anschließend ein Faskopf der Fasmaschine das Werkstück einseitig mit ausreichender Genauigkeit anfasen kann. Daran anschließend wird das einseitig angefaste Werkstück zu einer weiteren Positionierstelle transportiert, an welcher das Werkstück wiederum positioniert, fixiert und mittels eines weiteren Faskopfs der Fasmaschine an seinem zweiten, dem bereits angefasten Ende gegenüberliegenden Ende angefast wird. Fasmaschinen nach einem derartigen Arbeitsprinzip arbeiten zuverlässig, jedoch muss jedes Werkstück zweimal positioniert werden. Hierdurch ergeben sich insgesamt vier Arbeitsschritte, die im Wesentlichen aus einem ersten Positionieren und einem ersten Anfasen einer ersten Seite des Werkstücks und einem zweiten Positionieren und einem zweiten Anfasen des Werkstücks an einer zweiten Seite bestehen. In der DE 201 19 820 U1 und der EP 0 121 006 A1 hingegen wird die jeweilige Faseinrichtung in ihrer axialen Position belassen und das Werkstück axial auf der Bearbeitungsachse entsprechend gegen die Faseinrichtung verlagert.

Neben dieser Art von Fasmaschinen, bei welchen ein Werkstück schrittweise einseitig angefast wird, existieren weitere Fasmaschinen, bei denen beide Enden eines Werkstücks gleichzeitig angefast werden. Als Bespiel hierzu sei auf die in der deutschen Patentschrift 625 218 beschriebene Vorrichtung zum fortlaufenden selbsttätigen Entgraten von Rohren an beiden Enden verwiesen. Bei dieser Vorrichtung liegen sich zwei Fräswerkzeuge auf einer gemeinsamen Achse derart gegenüber, dass gleichzeitig an beiden Enden des Werkstücks eine Fase angefräst werden kann. Da jedoch die Werkstücke, insbesondere auch hinsichtlich ihrer Länge, gewissen Toleranzen unterliegen, müssen die Fräswerkzeuge gegenüber den Werkstücken oder umgekehrt die Werkstücke gegenüber den Fräswerkzeugen exakt zueinander ausgerichtet werden, damit nach dem Fräsen zum einen die Werkstücke untereinander und zum anderen die Enden eines Werkstücks zueinander in etwa, idealerweise exakt, die gleichen Fasen aufweisen. Um dies zumindest annähernd zu gewährleisten, sind die Fräswerkzeuge federnd gelagert, so dass die Fräswerkzeuge beim Fräsen in gewissen Grenzen unterschiedliche Werkstücklängen ausgleichen können. Bei größeren Längenunterschieden der Werkstücke jedoch müssen die Fräswerkzeuge mittels eines Handrads durch Bedienpersonal manuell vor oder zurück justiert werden. Dies ist sehr aufwändig und somit auch unwirtschaftlich.

Bei diesen Fasmaschinen werden die Werkstücke sukzessive mittels eines Kettenförderers dem jeweiligen Faswerkzeug zugeführt wie dieses in der Deutschen Patentschrift 625 218 ebenfalls dargestellt ist.

Eine Alternative hierzu ist in der EP 0 480 191 A2 bzw. in der US 5,465471 offenbart, bei welcher eine Fasmaschine mit einer Richtmaschine und einer Ablängmaschine kombiniert ist, wobei abgelängte Werkstücke mittels eines Querförderers von der Ablängmaschine zu der Fasmaschine gefördert werden. Hierbei weist die Fasmaschine zwei Faseinrichtungen auf, die auf einer Bearbeitungsachse liegend jeweils ein Werkstück bearbeiten können, während dieses von entsprechenden Klemmeinrichtungen auf der Bearbeitungsachse gehalten wird. Die Klemmeinrichtungen und die Faseinrichtungen können manuell an verschiedene Werkstücklängen angepasst werden. Eine Berücksichtigung von Längen- oder Lagetoleranzen der einzelnen zugeführten Werkstücke ist jedoch nicht vorgesehen.

Es ist Aufgabe vorliegender Erfindung bekannte Vorrichtungen und Verfahren zum Anbringen einer Fase an rohr- oder stangenartigen Werkstücken dahingehend weiter zu entwickeln, dass die Werkstücke zuverlässig und schnell bearbeitet werden können.

Die Aufgabe der Erfindung wird einerseits von einer Fasmaschine gemäß Anspruch 1 gelöst.

Andererseits wird die Aufgabe der Erfindung von einem Fasverfahren gemäß Anspruch 12 gelöst.

Auf diese Weise braucht die Faseinrichtung nur einen minimalen Weg in Bezug auf das Werkstück verlagert werden, da insbesondere ein Toleranzausgleich durch die Verlagerung des Werkstückes auf der Bearbeitungsachse erfolgen kann. Insoweit erfolgt bei vorliegender Erfindung eine Abkehr von bisherigen Faseinrichtung bzw. Fasverfahren zum Fasen von rohr- oder stangenartigen Werkstücken, bei denen - zumindest in einem Bearbeitungsbereich - das Werkstück festgehalten und eine Relativbewegung zwischen Faseinrichtung bzw. Faswerkzeug und Werkstück durch eine Bewegung der Faseinrichtung realisiert wurde. Hierdurch lässt sich erheblich Zeit bei den Bearbeitungsvorgängen einsparen, da einerseits die Faseinrichtungen in der Regel wesentlich schwerer als die zu bearbeitenden Werkstücke und somit aufwändiger schnell zu bewegen sind und da andererseits es bei einer geeigneten Ausgestaltung möglich ist, sowohl das Werkstück als auch das Faswerkzeug axial zu bewegen.

Um die Bearbeitungsposition, in welcher der eigentliche Fasvorgang stattfindet, kann ein Bearbeitungsbereich ausgebildet sein, welcher sich einerseits über die Länge des jeweiligen Werkstückes erstreckt und andererseits von zuvor bearbeiteten bzw. danach zu bearbeitenden Werkstücken frei ist. Auf diese Weise verbleibt um das zu bearbeitende Werkstück ausreichend Raum, insbesondere für Einrichtungen der Fasmaschine, wie einen Antrieb oder Klemmeinrichtungen. An sich ist ein derartiger Bearbeitungsbereich aus dem Stand der Technik, insbesondere bei einer getakteten Querförderung, bekannt.

Mittels eines sich einerseits über die Länge des jeweiligen Werkstückes erstreckenden und andererseits von zuvor bearbeiteten bzw. danach zu bearbeitenden Werkstücken freien Bearbeitungsbereichs kann ein Bereich um die Bearbeitungsposition definiert werden, in welchem sich während des Fasens bzw. Bearbeitens eines Werkstückes nur genau dieses Werkstück befindet.

Durch die Fasmaschine und das Volumen, welches die Fasmaschine einnimmt, ergibt sich ein darüber hinaus Bereich, welcher nur schwer von anderen Einrichtungen besetzt werden kann. Die erfindungsgemäße Richtungsänderung im Bearbeitungsbereich bedingt, dass insbesondere parallel zur Förderrichtung Einrichtungen und Geräte angeordnet werden können, da in der Regel durch die Richtungsänderung insbesondere senkrecht zur Bewegungsrichtung mehr Spielraum entsteht. Auf diese Weise können derartige Einrichtungen, wie beispielsweise etwaige Klemmeinrichtungen oder ähnliches, wesentlich enger an der Bearbeitungsposition gebaut werden, wodurch sich etwaige Toleranzen und Schwingungsphänomene minimieren lassen.

Zum Fasen werden die Werkstücke während des Fasens, beispielsweise mittels einer Klemmeinrichtung, in einer Bearbeitungsposition positioniert, wobei parallel zu den in der Bearbeitungsposition positionierten Werkstücken, vorzugsweise auf einer Rotationsachse eines umlaufenden Faswerkzeugs, eine Bearbeitungsachse definiert werden kann.

Insoweit kann es in einer besonders bevorzugten Verfahrensführung vorteilhaft sein, wenn das Werkstück zunächst in den Bearbeitungsbereich transportiert und dann entlang der Bearbeitungsachse verlagert wird. Auf diese Weise erfolgt die Verlagerung, beispielsweise in Abhängigkeit von Längen- oder Lagetoleranzen der zugeführten Werkstücke, unmittelbar vor dem Fasen und in unmittelbarer Nähe zu der Bearbeitungsposition, wodurch die Genauigkeit ohne eine Reduktion der Bearbeitungsgeschwindigkeit erhöht werden kann.

Kumulativ bzw. alternativ hierzu kann wenigstens eine Klemmeinrichtung das Werkstück zunächst achsstabil aber axial verlagerbar erfassen und erst nach einer axialen Ausrichtung das Werkstück klemmen. Auf diese Weise kann durch geeignete Mittel, wie beispielsweise verlagerbare Anschläge oder sogar eine verlagerbare Faseinrichtung das Werkstück erst geeignet in Bezug auf die Klemmeinrichtung positioniert werden, bevor der Klemmvorgang einsetzt, so dass die Klemmeinrichtung optimal in Bezug auf das Werkstück dasselbe klemmt. Selbiges kann auch dadurch erreicht werden, dass die Klemmbacken in Bezug auf das ruhende Werkstück zunächst verlagert und in eine optimale Position gebracht werden, bevor diese das Werkstück klemmend greifen.

Insofern ist es vorteilhaft, wenn zunächst das Werkstück in einen Bearbeitungsbereich transportiert, dann mittels einer Klemmeinrichtung erfasst und anschließend entlang der Bearbeitungsachse verlagert wird. Hierbei bedeutet der Begriff erfassen gerade nicht ein klemmen, sondern kann auch eine lediglich axiale Sicherung umfassen. Dementsprechend sind vorliegend zwei verschiedene Arten Klemmeinrichtungen vorteilhaft. Die eine Art wird zunächst in Bezug auf das Werkstück positioniert und klemmt dieses dann, um ggf. dann das Werkstück axial zu verlagern. Die andere Art erfasst das Werkstück ohne es zu klemmen, so dass es noch axial, auch in Bezug auf diese Klemmeinrichtung, verlagert werden kann; ist bei letzterer Art die optimale Position des Werkstücks in Bezug auf die Klemmeinrichtung erreicht, so wird das Werkstück dann geklemmt.

Die Klemmeinrichtung, welche insbesondere dazu dient, das Werkstück während des Fasens in seiner Position zu halten und den beim Fasen auf das Werkstück wirkenden Kräften zu begegnen, kann insbesondere axial verlagerbare Klemmbacken aufweisen. Hierdurch kann ein Werkstück, welches auf die Bearbeitungsachse gefördert wurde, ohne weiteres axial positioniert werden, ohne dass hierzu die Faseinrichtung bewegt werden muss. Dieses schließt jedoch nicht aus, dass die Faseinrichtung bereits während der Axialbewegung des Werkstückes bewegt wird.

Dementsprechend ist es, unabhängig von den verlagerbaren Klemmbacken, vorteilhaft, wenn die Klemmeinrichtung über Mittel zum Verlagern des Werkstückes entlang einer Bearbeitungsachse verfügt.

Vorzugsweise umfasst die Fasmaschine einen axial verlagerbaren Anschlag. Durch dieses kann, je nach konkreter Ausgestaltung einerseits das Werkstück axial verlagert werden. Andererseits kann auch das Werkstück gegen den axial verlagerbaren Anschlag verlagert werden und der axiale Weg des Anschlages, wenn das Werkstück diesen erreicht, als Signal, beispielsweise für einen Stopp der weiteren Axialbewegung des Werkstückes oder für einen Start der Bewegung der Faseinrichtung, genutzt werden. Der Anschlag ist vorzugsweise federnd ausgebildet, so dass Beschädigungen des Werkstückes vermieden werden.

Der Anschlag kann insbesondere auch an der Fasmaschine, vorzugsweise an einem Faswerkzeug, angeordnet sein. Eine derartige Lösung baut sehr klein und verzichtet auf unnötige Baugruppen, so dass die Fasmaschine insgesamt klein ausgebildet werden kann. Hierdurch reduzieren sich die Weglängen, was wiederum die Arbeitsgeschwindigkeit erhöht.

Insbesondere kann der Anschlag auf einer Rotationsachse des Faswerkzeugs angeordnet sein. Hierdurch kann das Werkstück unmittelbar gegen den Anschlag geschoben werden, wobei der Anschlag dann unmittelbar den Abstand zwischen Werkstück und Werkzeug definiert. Auch kann eine derartiger Anschlag, insbesondere wenn er federn ausgebildet ist, eine Werkstück axial bewegen, so dass eine Bewegung des Faswerkzeugs zunächst eine Bewegung des Werkstücks bedingt, ohne das Werkzeug wirksam das Werkstück erreicht. Die Faseinrichtung schiebt durch ihre Bewegung das Werkstück vor sich her, bis dieses einen anderen Anschlag, oder aber eine gegenüberliegende Faseinrichtung erreicht bzw. geeignet positioniert ist. Dann wird die Bewegung durch die andere Faseinrichtung oder einen Anschlag bzw. eine Klemmeinrichtung gestoppt, während die erste Faseinrichtung sich noch weiter bewegt, die Federkraft ihres Anschlags überwindet und so mit ihrem Faswerkzeug das Werkstück erreichen kann. Eine derartige Verfahrensführung ist äußerst effektiv und zeitsparend.

Eine besonders bevorzugte Ausführungsvariante sieht vor, dass die Fasmaschine eine Klemmeinrichtung mit einer Klemmkrafthauptrichtung zum Klemmen der Werkstücke während des Fasens aufweist, bei welcher die Klemmkrafthauptrichtung eine Komponente senkrecht zu einer durch eine Zu- und Abfuhrrichtung und die Bearbeitungsachse aufgespannten Ebene aufweist. Eine derartige Anordnung ermöglicht es auch unabhängig von den übrigen Merkmalen vorliegender Erfindung bei einer Fasmaschine mit wenigstens einem Faswerkzeug auf einer Bearbeitungsachse zum Anfasen von rohr- oder stangenartigen Werkstücken, bei welcher die Werkstücke entlang einer Zu- und Abfuhrrichtung auf die Bearbeitungsachse gebracht und dort mittels einer Klemmeinrichtung fixiert bzw. positioniert werden, ein Werkstück zum Anfasen zu fixieren und/oder zu positionieren, ohne dass die Klemmeinrichtung einen komplexen Bewegungsvorgang ausführen muss.

Dadurch, dass die Klemmkrafthauptrichtung eine Komponente senkrecht zu einer durch eine Zu- und Abfuhrrichtung und die Bearbeitungsachse aufgespannten Ebene aufweist, sind die Klemmeinrichtung bzw. entsprechende Klemmmittel, wie Klemmbacken, der Klemmeinrichtung seitlich der Werkstücke positioniert, so dass dementsprechend ein Werkstück ungehindert der Bearbeitungsachse zugeführt und von dieser wieder abgeführt werden kann.

Dieses ist insbesondere im Zusammenhang mit einem Hub-Schritt-Förderer von Vorteil, bei welchem nach einem Schritt eine vertikale Bewegung durchgeführt wird, da dann insbesondere ein Bereich oberhalb der Werkstücke im Bereich der Faswerkzeuge unverbaut sein und bleiben kann. Vorteilhafter Weise sind hierdurch die Faswerkzeuge besonders gut zugänglich, da der Raum bzw. der Zugang oberhalb der Faswerkzeuge nicht durch Klemmeinrichtungen oder hierzu gehörige Baugruppen verbaut ist bzw. verbaut werden muss. Sollte letzteres dennoch der Fall sein, können diese Baugruppen jedoch ohne weiteres derart ausgebildet sein, dass sie sich schnell und große Mühe entfernen lassen. Somit lassen sich nötige Arbeiten an den Faswerkzeugen wesentlich einfacher durchführen.

Kumulativ zu den vorstehend vorgeschlagen Lösungen wird eine Fasmaschine mit wenigstens einem Faswerkzeug auf einer Bearbeitungsachse zum Fasen von rohr- oder stangenartigen Werkstücken und mit einer Klemmeinrichtung zum Klemmen der Werkstücke vorgeschlagen, bei welcher die Klemmeinrichtung zum Klemmen der Werkstücke entlang der Bearbeitungsachse verlagerbar angeordnet ist bzw. entsprechende Verlagerungsmittel umfasst.

Durch dieses individuelle Verlagern der Klemmeinrichtung entlang der Bearbeitungsachse, kann die Klemmeinrichtung hinsichtlich jedes zu fasenden Werkstücks ideal positioniert werden, so dass ein optimales Klemmergebnis erzielt ist. Insbesondere kann hierdurch erreicht werden, dass bei jedem Fasvorgang die Klemmeinrichtung in einem idealen Abstand gegenüber dem Fräswerkzeug positioniert wird, so dass störende Schwingungen an den Werkstückenden beim Fasvorgang möglichst vermieden werden.

Insoweit ermöglicht diese Ausgestaltung, dass die Klemmeinrichtung einerseits das Werkstück in optimaler Weise klemmt, dass jedoch andererseits auch das Werkstück gegebenenfalls mittels der Klemmeinrichtung positioniert wird, wobei sich durch letzteres der Weg der Faseinrichtung minimieren lässt.

Durch eine Vorpositioniereinrichtung werden Werkstücke insbesondere gegenüber der Faseinrichtung derart vorpositioniert, dass die Faseinrichtung, insbesondere Faswerkzeuge der Faseinrichtung, von einer Startposition wesentlich schneller an einer Fasposition verfahren werden kann. Durch vorliegende Vorpositioniereinrichtung und dem diesbezüglichen Vorpositionieren der zu fasenden Werkstücke ist also gewährleistet, dass die Werkstücke der Faseinrichtung präziser als ohne Vorpositioniereinrichtung zugeführt werden. Hierdurch wird verhindert, dass die einzelnen Werkstücke zu weit von einem Faswerkzeug auf der Bearbeitungsachse angeordnet liegen, und entweder das Werkstück auf das Faswerkzeug hinzubewegt werden muss oder das Faswerkzeug beziehungsweise die Faseinrichtung einen unverhältnismäßig langen Weg zurücklegen muss, um das Werkstück bearbeiten zu können.

Dadurch, dass die Vorpositioniereinrichtung entlang der Bearbeitungsachse an einem Linearantrieb der Faseinrichtung geführt angeordnet ist, kann darüber hinaus vorliegend auf einen gesonderten Antrieb und einer gesonderten Führung der Vorpositioniereinrichtung verzichtet werden, so dass die vorliegende Fasmaschine insgesamt kompakter gebaut werden kann.

Gegenüber herkömmlichen Fasmaschinen, welche teilweise ebenfalls Vorpositioniereinrichtungen aufweisen, ist die Vorpositioniereinrichtung vorliegender Fasmaschine vorteilhafter Weise unmittelbar an der Faseinrichtung angeordnet. Somit entfallen, wie bereits vorstehend erläutert, Erfordernisse die Vorpositioniereinrichtung mittels eigener Antriebsmotoren auszustatten. Erfindungsgemäß genügt es, die vorliegende Vorpositioniereinrichtung mittels eines Linearantriebs der Faseinrichtung anzutreiben.

Dementsprechend sieht eine besonders bevorzugte Ausführungsvariante vor, dass die Vorpositioniereinrichtung derart mit einer Faseinrichtungsführung körperlich gekoppelt ist, dass die Vorpositioniereinrichtung eine translatorische Bewegung der Faseinrichtung entlang der Bearbeitungsachse folgt.

Diesbezüglich kann es insbesondere vorteilhaft sein, wenn die Vorpositioniereinrichtung (236) einen axial verlagerbaren, insbesondere federnd gelagerten, Anschlag umfasst. Durch diesen kann ein Werkstück ohne weiteres axial bewegt und somit vorpositioniert werden. Insbesondere kann die Vorpositioniereinrichtung einen axialen Vortrieb aufweisen, der mit einem Mitnehmer für ein zu positionierendes Werkstück wirkverbunden ist, wobei der Mitnehmer bei Erreichen eines Anschlages oder einer bestimmten Position entweder von dem Vortrieb getrennt wird oder das Werkstück freigibt. Dieses kann beispielsweise durch einen federnden Anschlag oder durch eine Rutschkupplung, wie beispielsweise durchrutschende Klemmbacken, realisiert werden.

Die Aufgabe der Erfindung wird kumulativ zu der vorstehend beschriebenen Erfindung von einer Fasmaschine mit wenigstens einer Faseinrichtung zum Fasen von rohr- oder stangenartigen Werkstücken, die in einer Bearbeitungsposition positioniert sind, und mit einer Transporteinrichtung zum Transportieren der Werkstücke zu der Bearbeitungsposition hin und von dieser weg gelöst, wobei um die Bearbeitungsposition ein Bearbeitungsbereich ausgebildet ist, welcher sich einerseits über die Länge des jeweiligen Werkstückes erstreckt und andererseits von zuvor bearbeiteten bzw. danach zu bearbeitenden Werkstücken frei ist, und welche sich dadurch auszeichnet, dass die Transporteinrichtung Mittel zur Änderung der Bewegungsrichtung des Werkstückes bezüglich der Fasmaschine innerhalb des Bearbeitungsbereiches aufweist.

Über die Transporteinrichtung erfolgt die Zu- bzw. Abfuhr der Werkstücke zu bzw. von der Bearbeitungsposition. Hierbei lässt sich für die Transporteinrichtung eine Förderrichtung definieren, die sich aus der Summe der Gesamtbewegungen bzw. aus dem Mittel der Gesamtbewegungen des von der Transporteinrichtung geförderten Werkstückes ergibt. Einzelne Hin- und Herbewegungen, wie beispielsweise Hub- und Senkbewegungen, bleiben bei der Definition der Förderrichtung unberücksichtigt, so dass die Förderrichtung in der Regel geradlinig ist.

Vorzugsweise weist die Bahn des Werkstückes an der Bearbeitungsposition eine Richtungsumkehr auf. Hierdurch verbleibt in dem Bearbeitungsbereich besonders viel Raum für Faseinrichtungen oder ähnliche Komponenten, da die Bahn des Werkstückes einen großen zusammenhängenden Bearbeitungsbereich nicht erfasst, der dann für derartige Komponenten frei bleibt. Aus demselben Grunde ist es vorteilhaft, wenn die Bahn des Werkstückes innerhalb des Bearbeitungsbereiches eine Spitze aufweist, wodurch ein sehr großer Bereich für Werkzeuge und ähnliches frei bleibt.

Die Bahn des Werkstückes kann innerhalb des Bearbeitungsbereiches wenigstes einen Teilkreis umfassen, was besonders einfach konstruktiv zu realisieren ist, so dass die Anordnung kostengünstig baut. Hierbei kann durch zwei Teilkreise eine vorstehend beschriebene Spitze in der Bewegungsbahn ohne weiteres realisiert werden.

Im Gegensatz zu bekannten Fasmaschinen werden die Werkstücke dem Faswerkzeug vorzugsweise nicht auf einer linearen Bahn zugeführt sondern durch einen Hub-Schritt-Förderer auf einer, vorzugsweise kreisbogenförmigen, Bahn, die ein Anheben der Werkstücke, ein Querfördem und ein Absenken umfasst. Durch das Absenken können die Werkstücke verhältnismäßig genau positioniert werden, so dass - ohne größeren weiteren konstruktiven Aufwand - die aufgabengemäße hohe Präzision erreicht werden kann. Vorzugsweise durchläuft ein Werkstück hierbei mehrere Schritte und wird somit entlang mehrerer aneinander gereihter Bahnen transportiert. Gegebenenfalls werden die Werkstücke auch auf entsprechenden Bahnen bzw. auf einer entsprechenden Bahn abgeführt.

Vorteilhafter Weise werden die zu bearbeitenden Werkstücke mittels des Hub-Schritt-Förderers den Faswerkzeugen getaktet zugeführt sowie vorzugsweise ebenfalls getaktet abgeführt. Hierbei können die Taktzyklen derart eingestellt werden, dass zwischen den einzelnen Takten genügend Zeit verbleibt, um mittels der Faswerkzeuge jedes Werkstück gleichzeitig beidseitig anzufasen.

Die Werkstücke werden besonders sicher mittels des Hub-Schritt-Förderers transportiert, wenn an Hub- und Senkmitteln, im weiteren als Aktoren bezeichnet, des Hub-Schritt-Förderers sowie an Ablagemitteln, im weiteren als Statoren bezeichnet, des Hub-Schritt-Förderers Werkstückaufnahmen für Werkstücke vorgesehen sind.

Es wird jedes Werkstück vorteilhafter Weise von dynamischen Werkstücksaufnahmen in statische Werkstückaufnahmen übergeben. Anschließend werden die Werkstücke von weiteren dynamischen Werkstückaufnahmen aus den statischen Werkstückaufnahmen heraus gehoben und an weitere statische Werkstückaufnahmen übergeben und so fort, bis jedes Werkstück sukzessiv dem Faswerkzeug zugeführt wurde.

Besonders einfach werden die Werkstücke zwischen den einzelnen Werkstückaufnahmen übergeben, wenn die dynamischen Werkstückaufnahmen eine Förderbewegung durchlaufen, die von einer Hubbewegung überlagert wird. Beispielsweise durchlaufen die dynamischen Werkstückaufnahmen eine in etwa vertikale Bewegung, um die Werkstücke aus den statischen Werkstückaufnahmen zu heben. Gleichzeitig durchlaufen die dynamischen Werkstückaufnahmen eine in etwa horizontale Bewegung, um die Werkstücke vorwärts in Richtung Faswerkzeug zu bewegen. Werden beide Bewegungen geeignet aufeinander abgestimmt, kann sich eine in etwa kreisbogenförmige Gesamtbewegung der dynamischen Werkzeugaufnahmen ergeben.

In diesem Zusammenhang ist es vorteilhaft, wenn die dynamischen Werkstückaufnahmen entlang einer Kreisbahn geführt werden. Insbesondere durch die kreisbogenförmige Bewegung werden die einzelnen Werkstücke sicher und baulich besonders einfach in Werkstückaufnahmen eingelegt und wieder heraus bewegt, da sich eine Kreisbahn verhältnismäßig einfach für die dynamischen Werkzeugaufnahmen realisieren lässt.

Andererseits können auch ganz andere Bewegungsabläufe vorgesehen sein. Beispielsweise kann auch eine Hub-Balken-Fördereinrichtung zur Anwendung kommen, bei welcher eine Teilfördereinrichtung die Werkzeuge vertikal hochhebt und wieder absenkt, während eine zweite Teilfördereinrichtung sich lediglich horizontal hin und her bewegt und auf diese Weise schrittweise fördert. Diese Lösung lässt verhältnismäßig große Schrittlängen bei kleinen Hüben zu, ist jedoch baulich verhältnismäßig aufwändig.

Hinsichtlich einer einfachen Ausführungsvarianten reichen vorteilhafter Weise bereits zwei hintereinander angeordnete Werkstückaufnahmen aus, um Werkstücke beispielsweise von einer Vorhalteeinrichtung zu einem Faswerkzeug zu transportieren.

Unter dem Begriff "Aktor" versteht man im Sinne der Erfindung Transportmittel der Transporteinrichtung, die aktiv bewegt werden und hierbei die Werkstücke derart vorwärts bewegen, dass sie den Faswerkzeugen entweder zugeführt, oder von den Faswerkzeugen abgeführt werden.

Der Begriff "Stator" beschreibt hingegen jegliche Transportmittel, mit denen Werkstücke, insbesondere zwischen zwei Bewegungsabläufen eines Aktors oder mehrerer Aktoren, abgelegt bzw. zwischengelagert werden.

Im Sinne der Erfindung umfasst der Begriff "Werkstückaufnahme" auch ein parallel zueinander angeordnetes Werkstückaufnahmepaar, in welches ein einzelnes Werkstück angeordnet wird. Die Werkstückaufnahmen des Werkstückaufnahmepaars arbeiten hierbei vorzugsweise synchron und sind idealerweise parallel und quer zur Förderrichtung zueinander angeordnet. Ein Werkstückaufnahmepaar stellt vorliegend eine Ausführungsvariante dar, welches insbesondere gut dazu geeignet ist, besonders lange Werkstücke sicher zu transportieren, da das Paar nahezu beliebig voneinander beabstandet angeordnet sein kann. Es versteht sich, dass auch eine über ein Werkstückaufnahmepaar hinaus gehende Anzahl an Werkstückaufnahmen derart parallel zueinander angeordnet sein kann, dass sie gemeinsam mit einem Werkstück korrespondieren.

Um im Sinne der Erfindung eine Werkzeugaufnahme zu bilden, reicht es schon aus, wenn die Werkzeugaufnahmen die Funktion einer Art Roll- bzw. Rutschhemmung ausüben, so dass die Gefahr verringert ist, dass die Werkstücke sich unbeabsichtigt gegenüber den Aktoren bzw. den Statoren verlagern.

Es hat sich gezeigt, dass es zum einen vorteilhaft ist, wenn ein Aktor wenigstens drei dynamische Werkstückaufnahmen aufweist. Mittels der drei dynamischen Werkzeugaufnahmen kann bei jedem Bewegungszyklus ein neues Werkstück gegriffen und zwei bereits in statische Werkzeugaufnahmen abgelegte Werkstücke vorwärts transportiert werden. Deshalb ist es auch vorteilhaft, wenn ein Stator wenigstens zwei statische Werkstückaufnahmen aufweist. Durch eine derartige Konstellation werden mittels des Aktors bei jedem Bewegungszyklus drei Werkstücke transportiert, das heißt angehoben, vorwärts bewegt und wieder abgelegt, wobei beispielsweise eine erste Werkstückaufnahme im Bereich des Faswerkzeugs abgelegt wird und zwei Werkstücke jeweils in die beiden statischen Werkstückaufnahmen des Stators.

Bei einem erneuten Umlauf des Aktors korrespondiert eine der drei dynamischen Werkstückaufnahmen des Aktors vorzugsweise mit einer Vorhalteeinrichtung für Werkstücke und greift somit ein neues Werkstück aus der Vorhalteeinrichtung ab.

Durch die Hub-Senkbewegung ist ohne Weiteres ein verhältnismäßig sicheres Greifen der einzelnen Werkstücke möglich, was bei den Ketten- bzw. Raupentransporten, wie sich beispielsweise in der Deutschen Patentschrift 625 218 offenbart sind, wesentlich komplexer zu bewerkstelligen ist, da hier die einzelnen Greifer lediglich in Transportrichtung bewegt werden. Darüber hinaus kann, wie bereits vorstehend beschrieben, ein erfindungsgemäßer Hub-Schritt-Förderer mit an sich starren Werkstückaufnahmen, die an starren Balken angeordnet sind, ausgestattet werden, wobei dann einer der Balken in seiner Gesamtheit als Aktor die entsprechenden Bewegungen ausführen kann. Hierdurch lässt sich die Zahl der bewegten Bauteile gegenüber Ketten- bzw. Raupentransporten minimieren, wodurch sich die Zuverlässigkeit der Positionierung sowie die Wartungsfreiheit erheblich erhöhen lässt.

Zum Vorhalten einzelner Werkstücke ist es vorteilhaft, wenn die Fasmaschine eine Vorhalteeinrichtung für Werkstücke aufweist, welche Werkstücke einzeln für die Transporteinrichtung bereitstellt. Mittels einer derartigen Vorhalteeinrichtung ist gewährleistet, dass Werkstücke nur einzeln einer Werkstückaufnahme eines Aktors zur Verfügung gestellt werden, so dass die Werkstückaufnahme des Aktors das Werkstück unmittelbar und direkt greifen und mitnehmen kann. Auf komplexe Zufuhreinrichtungen kann dann verzichtet werden.

Insbesondere, wenn es sich bei den rohr- oder stangenartigen Werkstücken um relativ große bzw. schwere Werkstücke handelt, ist es vorteilhaft, wenn die Transporteinrichtung Energiespeicher aufweist, welche Energie bei einer Senkbewegung der Aktoren speichert und die gespeicherte Energie bei einer weiteren Bewegung der Aktoren, beispielsweise einer Hub- oder Vertikalbewegung, wieder freigeben. Auf diese Weise kann dem scheinbaren Nachteil der Hub-Schritt-Förderer, dass ein großes Gewicht angehoben werden muss, begegnet werden, indem beispielsweise ein Gegengewicht oder Federn als Energiespeicher vorgesehen werden. Darüber hinaus kompensiert ein Hub-Schritt-Förderer durch die Gleichmäßigkeit seiner Bewegung und die erheblich geringer Zahl bewegter Bauteile diesen Nachteil gegenüber lediglich linear arbeitenden Quertransporten, bei denen einerseits eine große Zahl bewegter Teile zu Verlusten führt und andererseits alle Werkstücke ebenfalls schrittweise transportiert und somit beschleunigt und abgebremst werden müssen, da das Fasen eine gewisse Zeit benötigt.

Die Fasmaschine weist eine Messeinrichtung zum Erfassen eines Werkstückendes auf. Auf diese Weise können das jeweilige zu bearbeitende Werkzeug, etwaige Klemmeinrichtungen und die Faseinrichtung oder Faseinrichtungen sehr früh geeignet positioniert werden, was bei einer rein mechanischen Lösung nicht ohne weiteres möglich ist. Hierdurch lässt sich dann die Taktfrequenz erhöhen.

Mittels einer derartigen Messeinrichtung kann die optimale Position eines Werkstückendes insbesondere vor und beim Fasen eines Werkstücks konstruktiv besonders einfach ermittelt werden, wodurch sich auch die Qualität des Fasergebnisses um ein Vielfaches verbessern lässt.

Mit der Messeinrichtung werden Daten hinsichtlich der Länge und/oder der Lage bzw. der Enden der Werkstücke ermittelt.

Es versteht sich, dass die Messeinrichtung eine Vielzahl an unterschiedlichen Messmitteln aufweisen kann. Eine bevorzugte Ausführungsvariante sieht vor, dass die Messeinrichtung wenigstens einen optischen Emitter aufweist. Durch einen derartigen Emitter kann auch unter widrigen Bedingungen und mit einem verhältnismäßig großen Abstand zu den Werkstücken ein ausreichend messbares Signal erzeugt werden. Beispielsweise ist dieser optische Emitter ein Laserstrahl, der zur Messung eingesetzt wird. Darüber hinaus ist es dementsprechend vorteilhaft, wenn die Messeinrichtung wenigstens einen optischen Sensor aufweist.

Insbesondere kann die Messeinrichtung an einer Klemmeinrichtung angeordnet sein, wodurch für eine Halterung und auch für eine etwaige Bewegung der Messeinrichtung keine separaten Baugruppen vorgesehen sein müssen. Hierdurch lässt sich insbesondere Bauraum einsparen und somit die Zugänglichkeit zu andern Baugruppen erhöhen bzw. nicht beeinträchtigen. Besonders, wenn eine an einer Klemmeinrichtung angeordnete Messeinrichtung vorgesehen ist, ist es vorteilhaft, wenn die Klemmeinrichtung zum Klemmen der Werkstücke entlang der Bearbeitungsachse verlagerbar angeordnet ist.

Eine derartige Anordnung bzw. ein derartiges Verfahren sind unter anderem vorteilhaft, um schnell und betriebssicher eine Klemmeinrichtung und/oder ein Werkstück bzw. ein Faswerkzeug optimal zu positionieren.

Vorteilhafter Weise werden die Werkstücke bereits vor dem Klemmen vermessen, so dass die Länge und die Lage jedes Werkstücks und die Position der Enden jedes Werkstücks genau ermittelt wurde, bevor das Werkstück geklemmt und gefast wird. Hierdurch lässt sich das Fasen erheblich beschleunigen. Besonders vorteilhaft ist es in diesem Zusammenhang, wenn eine Klemmeinrichtung vor einem Klemmen der Werkstücke in Abhängigkeit der Länge und/oder der Lage bzw. der Enden der Werkstücke gegenüber den Werkstücken verfahren und positioniert wird. Hierdurch werden die Werkstücke zum Bearbeiten mit einem Faswerkzeug besonders vorteilhaft eingeklemmt und es kann auf ein Verlagern der Werkstücke selbst verzichtet werden, was möglicherweise ansonsten zu einer Beschädigung der Werkstücke führen könnte.

Es versteht sich, dass die Messvorrichtung an den unterschiedlichsten Orten an der Fasmaschine angeordnet sein kann. Wie bereits erläutert, ist es vorteilhaft, wenn die Messeinrichtung beispielsweise an der Klemmeinrichtung angeordnet ist. Kumulativ oder alternativ hierzu kann es vorteilhaft sein, wenn die Messeinrichtung an einem Faskopf einer Faseinrichtung angeordnet ist, da insbesondere Messungen im Bereich des Faskopfs eine gewisse Nähe zu den Werkstückenden garantiert und letztlich die Lage des Werkstückendes in Bezug auf den Faskopf für das Fasergebnis von entscheidender Bedeutung ist.

Um ein hinreichend genaues Messergebnis zu erhalten, ist es vorteilhaft, wenn die Messeinrichtung oder Emitter bzw. Sensoren der Messeinrichtung von einem Faskopf der Faschmaschine mehr als 100 mm, vorzugsweise mehr als 150 mm, beabstandet angeordnet sind. Durch einen derart gewählten Abstand haben die Messeinrichtungen, wie beispielsweise ein Sensor bzw. ein Emitter, einen ausreichenden Abstand von dem Faskopf, wodurch ein Beschädigen oder aber auch ein Verschmutzen der Messeinrichtung vermieden werden kann und somit die Messgenauigkeit verbessert wird, zumal die Bebarbeitung der Werkstücke mit einer sehr hohen Geschwindigkeit vorgenommen wird.

Um die Wege für Messsignale nicht zu groß zu wählen und die Messgenauigkeit nicht zu sehr zu beeinträchtigen, ist es vorteilhaft, wenn die Messeinrichtung oder Emitter bzw. Sensoren der Messeinrichtung von einem Faskopf der Faschmaschine weniger als 1000 mm, vorzugsweise weniger als 500 mm beabstandet angeordnet sind.

Es versteht sich, dass die hierbei gewählten Abstände auch unabhängig von den übrigen Merkmalen vorliegender Erfindung für eine Fasmaschine vorteilhaft sind, um mittels einer Messeinrichtung dieser Fasmaschine betriebssicher ausreichend genaue Messergebnisse zu erhalten.

Um die Messgenauigkeit weiter zu erhöhen, ist es vorteilhaft, wenn die Fasmaschine mehr als eine Messeinrichtung aufweist. Hierdurch können simultan bzw. nacheinander an unterschiedlichen Stellen der Fasmaschine Messungen an einem Werkstück vorgenommen werden. So ist es beispielsweise möglich, eine Messeinrichtung an einer Klemmeinrichtung und einem mit der Klemmeinrichtung korrespondierendem Faskopf vorzusehen. Ebenso können an jeder Klemmeinrichtung bzw. an jedem Faskopf Messeinrichtungen vorgesehen sein. Bei letzteren beiden Alternativen können somit beide Enden eines Werkstückes vermessen werden, so dass einerseits die Position eines Werkstückes und andererseits die Länge desselben ermittelt und die Werkstückenden geeignet angefast werden können, wodurch insbesondere auch die Toleranzen der bearbeiteten Werkstücke minimiert werden können..

Ein besonders schnelles und genaues Messergebnis wird erzielt, wenn eine Messeinrichtung für eine Grobmessung zuerst schnell und anschließend für eine Feinmessung langsam entlang der Bearbeitungsachse bewegt wird. Hierbei fährt die Messeinrichtung zuerst in einem Schnellgang an einer Messstelle vorbei, ermittelt hierbei erste Daten, verringert die Geschwindigkeit und führt mit einer reduzierten Geschwindigkeit eine Feinmessung durch.

Eine Ausführungsvariante sieht vor, dass die Messeinrichtung während der Grobmessung in eine erste Richtung bewegt und während der Feinmessung in eine zweite der ersten Richtung vorzugsweise entgegen gesetzten Richtung bewegt wird.

Es versteht sich, dass die Messeinrichtung hierzu beispielsweise an einem verfahrbaren Schlitten angeordnet werden kann. Eine konstruktiv und verfahrenstechnisch besonders einfache Variante, sieht vor, dass die Messeinrichtung mittels einer Klemmeinrichtung oder einem Faskopf entlang der Bearbeitungsachse verfahren wird. Ist die Messeinrichtung an einer Klemmeinrichtung oder einem Faskopf befestigt, kann vorteilhafter Weise auf eine zusätzliche Bewegungseinrichtung, wie etwa dem verfahrbaren Schlitten, hinsichtlich der Messeinrichtung verzichtet werden.

Weitere Vorteile, Ziele und Eigenschaften vorliegender Erfindung werden anhand nachfolgender Erläuterungen anliegender Zeichnungen beschrieben, in welcher beispielhaft schematisch Fasmaschinen dargestellt sind.

Es zeigt
- Figur 1: schematisch eine Aufsicht einer Fasmaschine mit an Klemmeinrichtungen angeordneten Messeinrichtungen,
- Figur 2: schematisch eine Aufsicht einer Fasmaschine mit an Faseinrichtungen angeordneten Messeinrichtungen,
- Figur 3: schematisch eine Aufsicht auf eine Fasmaschine mit einer Faseinrichtung, an welcher eine Vorpositioniereinrichtung angeordnet ist,
- Figuren 4 und 5: schematisch Aufsichten auf eine Fasmaschine mit zwei Faseinrichtungen in verschiedenen Arbeitspositionen, wobei an den Faseinrichtungen jeweils eine Messeinrichtung und eine Vorpositioniereinrichtung angeordnet sind,
- Figur 6: schematisch eine Seitenansicht einer weiteren Fasmaschine mit einem Hub-Schritt-Förderer und
- Figuren 7 bis 10: schematisch einen Bewegungsablauf eines Aktors der weiteren Fasmaschine aus Figur 6.

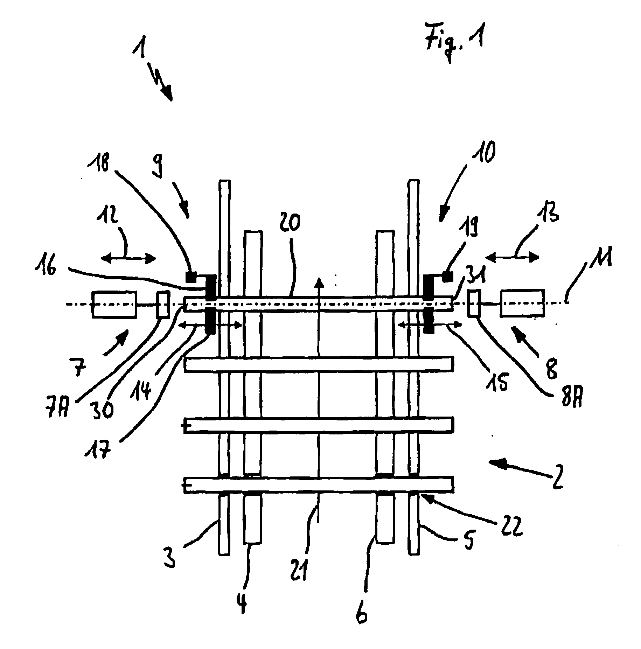

Die in der Figur 1 gezeigte Fasmaschine 1 umfasst einen Quertransport 2 mit einem ersten linken Fördermittel 3, einem zweiten linken Fördermittel 4 sowie einem ersten rechten Fördermittel 5 und einem zweiten rechten Fördermittel 6. Darüber hinaus umfasst die Fasmaschine 1 eine erste Faseinrichtung 7 mit einem Faswerkzeug 7A und eine zweite Faseinrichtung 8 mit einem Faswerkzeug 8A sowie eine erste Klemmeinrichtung 9 und eine zweite Klemmeinrichtung 10.

Die beiden Faseinrichtungen 7, 8 mit ihren beiden Faswerkzeuge 7A und 8A sind auf einer gemeinsamen Bearbeitungsachse 11 platziert und können jeweils gemäß der Bewegungsrichtungen 12 der ersten Faseinrichtung 7 und der Bewegungsrichtungen 13 der zweiten Faseinrichtung 8 entlang der Bearbeitungsachse 11 translatorisch hin und her bewegt werden. Die beiden Faseinrichtungen 7, 8 stellen somit einen Linearantrieb für das jeweilige Faswerkzeug 7A und 8A dar.

Ähnliches gilt für die beiden Klemmeinrichtungen 9 und 10. Auch diese können gemäß der Bewegungsrichtungen 14 der ersten Klemmeinrichtung 9 und der Bewegungsrichtungen 15 der zweiten Klemmeinrichtungen 10 ebenfalls translatorisch entlang der Bearbeitungsachse 11 bewegt werden.

Sowohl die erste Klemmeinrichtung 9 als auch die zweite Klemmeinrichtung 10 umfassen eine erste Klemmbacke 16 und eine zweite Klemmbacke 17 (der Übersichtigkeit halber nur exemplarisch hinsichtlich der ersten Klemmeinrichtung 9 beziffert). An der Klemmeinrichtung 9 ist eine Messeinrichtung 18 und an der Klemmeinrichtung 10 ist eine Messeinrichtung 19 angeordnet.

Mittels der beiden Messeinrichtungen 18 und 19 können die Lage, die Länge sowie die Enden des jeweiligen Werkstücks 20, insbesondere eines im Bereich der Bearbeitungsachse 11 befindlichen Werkstückes 20, ermittelt bzw. vermessen werden. Anhand der ermittelten Daten werden die Positionen der Klemmeinrichtungen 9 und 10 sowie die Arbeitsbewegung des ersten Faswerkzeugs 7A und des zweiten Faswerkzeugs 8A errechnet und bestimmt.

Die einzelnen Werkstücke 20 werden sukzessiv mittels des Quertransportes 2 an der Bearbeitungsachse 11 bereitgestellt. Hierzu werden die Werkstücke 20 in Transportrichtung 21 bewegt.

Damit jedes Werkstück 20 beim Bewegen an seine dafür vorgesehenen Stelle verbleibt, weisen bei diesem Ausführungsbeispiel die Fördermittel 3, 4, 5 und 6 Werkzeugaufnahmen 22 (lediglich exemplarisch an dem unteren Werkstück angedeutet und beziffert) auf, die ein unbeabsichtigtes Verschieben der Werkstücke 20 vermeiden.

Wie aus dieser schematischen Darstellung ersichtlich, sind bei diesem Ausführungsbeispiel die Messeinrichtungen 18 und 19 jeweils an den Klemmeinrichtungen 9 und 10 angeordnet und messen im Wesentlichen in einer von der Transportrichtung 21 und der Bearbeitungsachse 11 aufgespannten Ebene. Hierbei werden vorliegend ein optischer Emitter (hier nicht explizit gezeigt) und wenigstens zwei parallel zur Bearbeitungsachse 11 angeordnete optische Receiver (hier nicht explizit gezeigt) verwendet, die auf einer identischen Seite des Werkstückes 20 angeordnet und von der Bearbeitungsachse 11 um 100 mm entfernt vorgesehen sind. Insofern findet hier eine reflektive Messung statt.

Sowie ein Werkstück 20 in die auf der Bearbeitungsachse 11 angeordneten Werkstückaufnahme 22 eingelegt wurde, werden die beiden Klemmeinrichtungen 9 und 10 in Richtung auf die jeweiligen Werkstückenden so schnell als möglich verfahren. Sämtliche Sensoren (Receiver) messen solange ein Signal bis das Werkstückende erreicht ist. Sowie der erste Sensor kein Signal mehr erhält, wird die Geschwindigkeit drastisch abgesenkt, bis auch der zweite Sensor kein Signal mehr empfängt, und gleichzeitig das Faswerkzeug 7A, 8A in Richtung auf das erste Werkstückende 30 und das zweite Werkstückende 31 beschleunigt. Nunmehr verfährt die Klemmeinrichtung 9, 10 wesentlich langsamer in die andere Richtung bis der zweite Sensor die Werkstückenden 30, 31 erkennt. Letzteres erfolgt mit wesentlich höherer Genauigkeit, als dieses bei einer schnell bewegten Messeinrichtung 18, 19 der Fall wäre, wobei diese Messfolge auch lediglich mit einem Sensor durchgeführt werden kann. Sowie die Positionen der Werkstückenden 30, 31 genau ermittelt sind, werden die entsprechenden Klemmbacken 16, 17 geschlossen. Da die Klemmeinrichtungen 9 und 10 wesentlich kleiner als die Faseinrichtungen 7, 8 sind und auch nur wesentlich kleinere Wege zurücklegen müssen, während sich das Faswerkzeug 7A, 8A auf das jeweilige Werkstückende 30, 31 zu bewegt, erfolgt die genaue Positionsmessung und das Klemmen, bevor das Faswerkzeug 7A, 8A das jeweilige Werkstückende 30, 31 erreicht hat, so dass das Faswerkzeug 7A, 8A dann schnell und genau positioniert werden kann.

Es versteht sich, dass in einer alternativen Ausführungsform auch die Faseinrichtungen 7 und 8 stationär ausgebildet und die Werkstücke 20 über die Klemmeinrichtungen 9 und 10 geeignet bewegt werden können. Dieses erscheint aus Gründen der Arbeitsgeschwindigkeit jedoch weniger vorteilhaft.

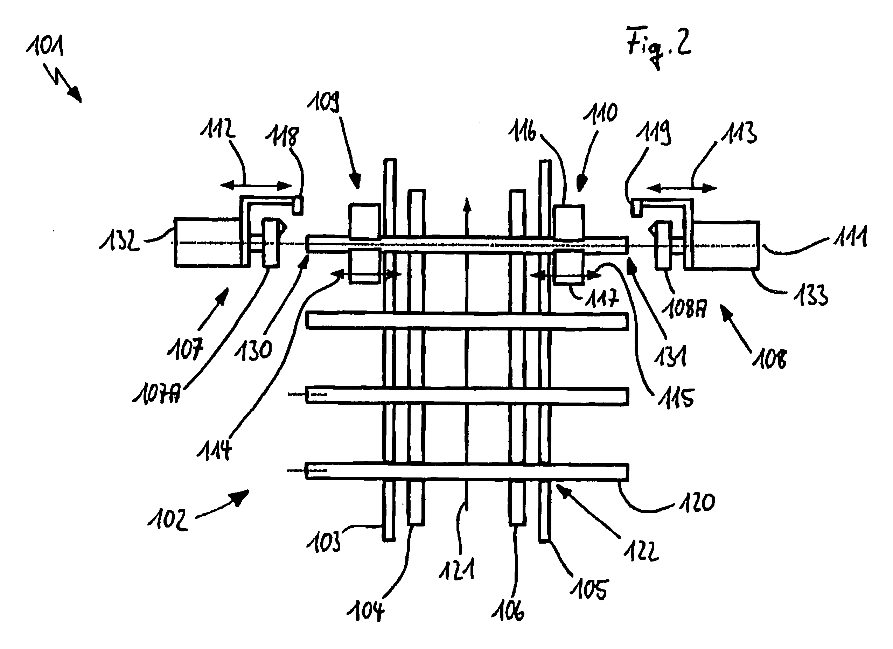

Die in der Figur 2 gezeigte Fasmaschine 101 entspricht im Wesentlichen der Fasmaschine 1 nach Figur 1, so dass gleiche oder gleichwirkende Anordnungen auch ähnlich beziffert sind.

Die Fasmaschine 101 weist einen Quertransport 102 auf, mit welchem die einzelnen Werkstücke 120 (hier nur exemplarisch beziffert) in Transportrichtung 121 quer zur Bearbeitungsachse 111 transportiert werden. Hierzu weist der Quertransport 102 ein erstes linkes Fördermittel 103, ein zweites linkes Fördermittel 104, ein erstes rechtes Fördermittel 105 und ein zweites rechtes Fördermittel 106 auf, sodass die Werkstücke 120 zum Bearbeiten sukzessiv in Richtung der Bearbeitungsachse 111 transportiert und nach dem Bearbeiten sukzessiv von der Bearbeitungsachse weg transportiert werden.

Damit die Werkstücke 120 während des Transportes mit dem Quertransport 102 möglichst an Ihre vorgesehenen Position auf den Fördermitteln 103, 104, 105 und 106 liegen bleiben, weisen die Fördermittel 103, 104, 105 und 106 jeweils eine Werkstückaufnahme 122 (hier nur exemplarisch beziffert) auf.

Im Bereich der Bearbeitungsachse 111 sind eine Klemmeinrichtung 109 und eine weitere Klemmeinrichtung 110 vorgesehen, mit welchen jedes Werkstück 120 im Bereich der Bearbeitungsachse 111 festgeklemmt wird, sodass jedes Werkstück 120 nacheinander mittels einer ersten Faseinrichtung 107 und einer zweiten Faseinrichtung 108 bearbeitet werden kann.

Sowohl die Klemmeinrichtung 109 als auch die Klemmeinrichtung 110 umfassen eine erste Klemmbacke 116 und eine zweite Klemmbacke 117 (der Übersichtigkeit halber nur hinsichtlich der zweiten Klemmeinrichtung 110 beziffert). Die beiden Klemmbacken 116 und 117 korrespondieren miteinander derart, dass sie ein zu bearbeitendes Werkstück 120 vorzugsweise nahe der Werkstückenden 130 und 131 klemmen, um so zu unterbinden, dass die Werkstückenden 130, 131 während des Bearbeitens kritisch anfangen zu schwingen. Bei Bedarf klemmen die Klemmeinrichtungen 109, 110 die Werkstücke 120 derart, dass die Klemmbacken 116, 117 lediglich weniger als 2 mm von einem Stimseitenende des Werkstücks 120 entfernt, dieses Werkstück 120 klemmt.

Um die Klemmeinrichtungen 109 und 110 gegenüber unterschiedlich lang ausgebildeten Werkstücken 120 optimal ausrichten zu können, ist die erste Klemmeinrichtung 109 gemäß erster Bewegungsrichtungen 114 und die zweite Klemmeinrichtung 110 gemäß zweiter Bewegungsrichtungen 115 entlang der Bearbeitungsachse 111 verlagerbar.

Zum Fasen der Werkstückenden 130, 131 weist die erste Faseinrichtung 107 ein Faswerkzeug 107A und die zweite Faseinrichtung 108 ein Faswerkzeug 108A auf. Sowohl das Faswerkzeug 107A als auch das Faswerkzeug 108A sind an der jeweiligen Faseinrichtung 107, 108 derart gelagert, dass sie um die Bearbeitungsachse 111 rotierend an der jeweiligen Faseinrichtung 107, 108 gelagert sind.

Damit die beiden Faseinrichtungen 107, 108 das jeweilige Werkstück 120 bearbeiten können, ist die Faseinrichtung 107 an einem Faseinrichtungsschlitten 132 gemäß erster Bewegungseinrichtungen 112 entlang der Bearbeitungsachse 111 translatorisch hin und her bewegbar gelagert. Dementsprechend ist auch die Faseinrichtung 108 an einem Faseinrichtungsschlitten 133 gemäß zweiter Bewegungseinrichtungen 113 entlang der Bearbeitungsachse 111 translatorisch hin und her bewegbar gelagert. Sowohl der erste Faseinrichtungsschlitten 132 als auch der zweite Faseinrichtungsschlitten 133 bilden in diesem Ausführungsbeispiel einen Linearantrieb für die Faseinrichtungen 107, 108 entlang der Bearbeitungsachse 111.

Um das jeweilige Werkstückende 130 beziehungsweise 131 exakt gegenüber der jeweiligen Position des Faswerkzeuges 107A beziehungsweise 108A ermitteln zu können, ist an der ersten Faseinrichtung 107 eine Messeinrichtung 118 und an der zweiten Faseinrichtung 108 eine Messeinrichtung 119 angebracht. Somit sind die Messeinrichtungen 118, 119 jeweils mittels einer Faseinrichtung 107, 108 verlagerbar entlang der Bearbeitungsachse 111 angeordnet.

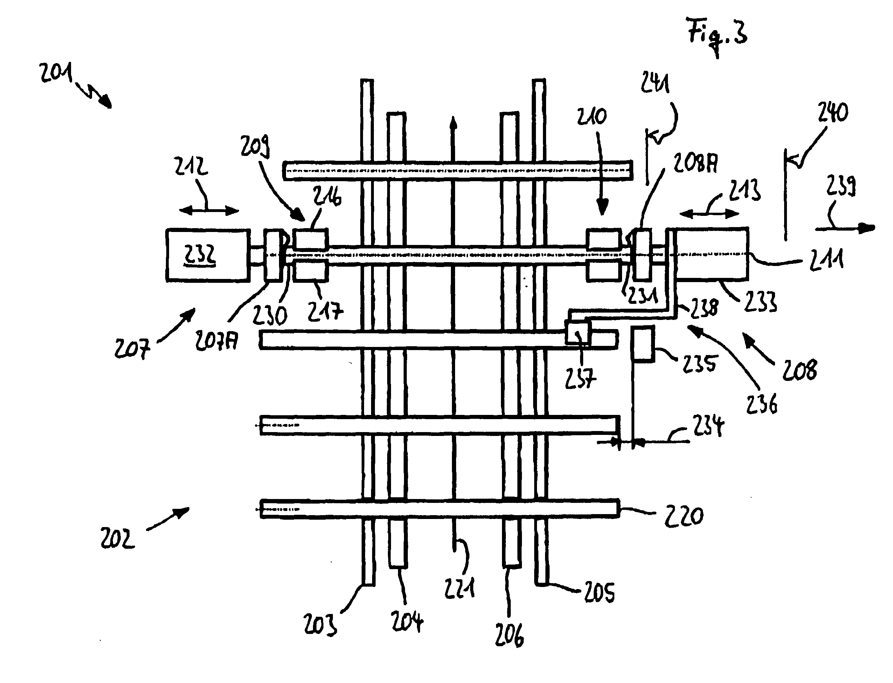

Die in der Figur 3 gezeigte Fasmaschine 201 weist einen Quertransport 202 mit Fördermittel 203, 204, 205 und 206 auf, um Werkzeugstücke 220 in Transportrichtung 221 einer ersten Faseinrichtung 207 und einer zweiten Faseinrichtung 208, welche auf einer Bearbeitungsachse 211 angeordnet sind, zuzuführen.

Die Faseinrichtungen 207 und 208 weisen einen Faseinrichtungsschlitten 132 beziehungsweise 133 auf, der gemäß der Doppelpfeile 212 beziehungsweise 213 entlang der Bearbeitungsachse 211 translatorisch hin und her bewegbar ist, sodass ein Faswerkzeug 207A der ersten Faseinrichtung 207 als auch ein Faswerkzeug 208A der zweiten Faseinrichtung 208 dem zu bearbeitenden Werkstück 220 beziehungsweise seinem entsprechendem Werkstückende 230, 231 zugestellt oder von dem zu bearbeitenden Werkstück 220 beziehungsweise seinem entsprechendem Werkstückende 230, 231 abgeführt werden kann.

Da es häufig vorkommt, dass die einzelnen Werkstücke 220 ungleichmäßig und dementsprechend um einen Abstand 234 versetzt zu einer ausreichend guten Bearbeitungsposition auf dem Quertransport 202 angeordnet sind, werden die einzelnen Werkstücke 220 gegen einen Anschlag 235 verlagert, sodass jedes Werkstück 220 unmittelbar vor dem Erreichen der Bearbeitungsposition auf der Bearbeitungsachse 211 ausreichend gut gegenüber den Faswerkzeugen 207A und 208A vorpositioniert sind. Durch dieses Vorpositionieren wird erzielt, dass die jeweiligen Faseinrichtungen 207, 208 lediglich um einen geringen Verfahrweg entlang der Bearbeitungsachse 211 verlagert werden müssen, um so schnellstmöglich in eine Fasposition zu gelangen. Hierdurch reduzieren sich die Bearbeitungszeiten erheblich, da durch das Vorpositionieren die einzelnen Werkstücke 220 auf der Bearbeitungsachse 211 bereits vorteilhaft ausgerichtet sind und dadurch die Faswerkzeuge 207A und 208A schneller das zu bearbeitende Werkstück 220 erreichen.

Dieses Vorpositionieren geschieht mittels einer Vorpositioniereinrichtung 236, welche einen Werkstückgreifer 237 aufweist. Der Werkstückgreifer 237 ist mittels eines Haltearms 238 unmittelbar an der zweiten Faseinrichtung 208, insbesondere an dem Faseinrichtungsschlitten 232 der zweiten Faseinrichtung 208, angeordnet, sodass der Werkstückgreifer 237 zwangsläufig den translatorischen Bewegungsrichtungen 213 des Faseinrichtungsschlittens 232 folgt. Vorteilhafter Weise ist auf Grund dieser Konstruktion ein eigenständiger Antrieb für die Vorpositioniereinrichtung 236 nicht erforderlich.

Die Arbeitsweise kann folgendermaßen beschrieben werden. Ist ein Fasvorgang durch das Faswerkzeug 208A an einem Werkstück 220 abgeschlossen, bewegt sich die gesamte Faseinrichtung 208, insbesondere auch der Faseinrichtungsschlitten 233 von dem Ende 231 des Werkstückes 220 gemäß einer Rückstellbewegung 239 weg. Dadurch, dass der Haltearm 238 unmittelbar an dem Faseinrichtungsschlitten 233 befestigt ist, folgt der Werkstückgreifer 237 der Rückstellbewegung 239. Hierbei greift der Werkstückgreifer 237 das Werkstück 220 bereits derart, dass das Werkstück 220 ebenfalls gemäß der Rückstellbewegung 239 bis gegen den Anschlag 235 bewegt wird. Vorliegend greift der Werkstückgreifer 237 das Werkstück 220 lediglich mit einer derartigen Kraft, dass zwischen dem Werkstückgreifer 237 und dem Werkstück 220 während des Bewegens bis an den Anschlag 235 heran eine Haftreibung realisiert ist. Gelangt das Werkstück 220 gegen den Anschlag 235 und kann somit der Bewegung des Werkstückgreifers 237 nicht weiter folgen, geht diese Haftreibung zwischen dem Werkstückgreifer 237 und dem Werkstück 220 in eine Gleitreibung über und der Werkstückgreifer 237 rutscht über die Oberfläche des gegriffenen Werkstücks 220. vorzugsweise erst wenn die Faseinrichtung 208 in eine Umkehrposition 240 verfahren ist, öffnet der Werkstückgreifer 237 und gibt das gegen den Anschlag 235 verlagerte und somit vorpositionierte Werkstück 220 frei.

Das so vorpositionierte Werkstück 220 wird nun weiter bis auf die Bearbeitungsachse 211 transportiert. In der Zwischenzeit ist die Faseinrichtung 208 bereits wieder in eine Startposition 241 verfahren. Dort kann die Faseinrichtung 208 solange verbleiben, bis eine erste Klemmeinrichtung 209 und gegebenenfalls eine zweite Klemmeinrichtung 210 das zu bearbeitende Werkstück 220 auf der Bearbeitungsachse 211 festgeklemmt. Hierzu verfährt jede Klemmeinrichtung 209, 210 ihre Klemmbacken 216, 217 (hier nur hinsichtlich der Klemmeinrichtung 209 beziffert) in Richtung der Bearbeitungsachse 211 und klemmt dabei das zu bearbeitende Werkstück 220 sicher auf der Bearbeitungsachse 211 und gegenüber den Faswerkzeugen 207A und 208A fest.

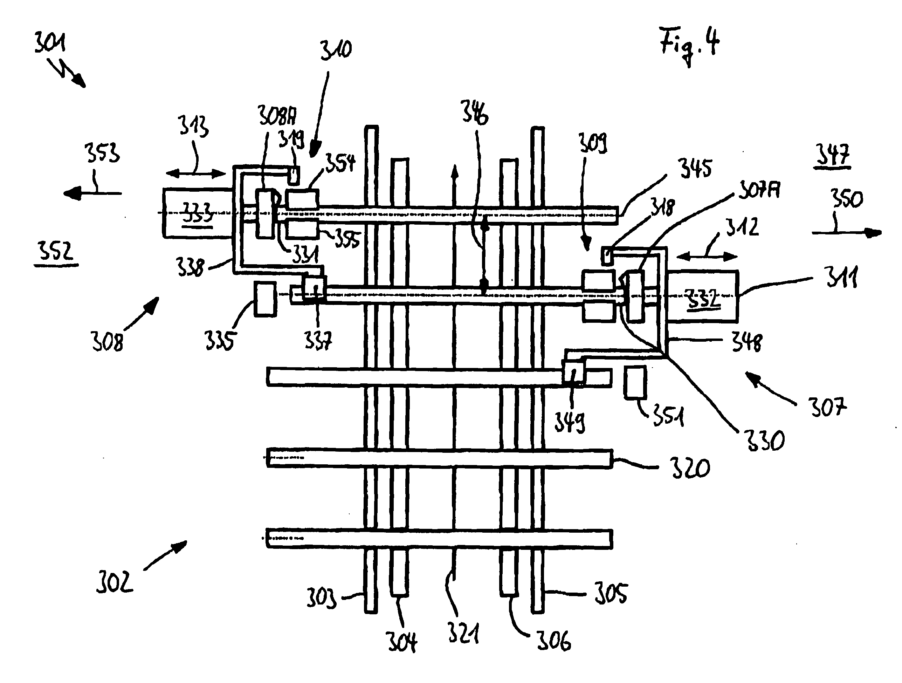

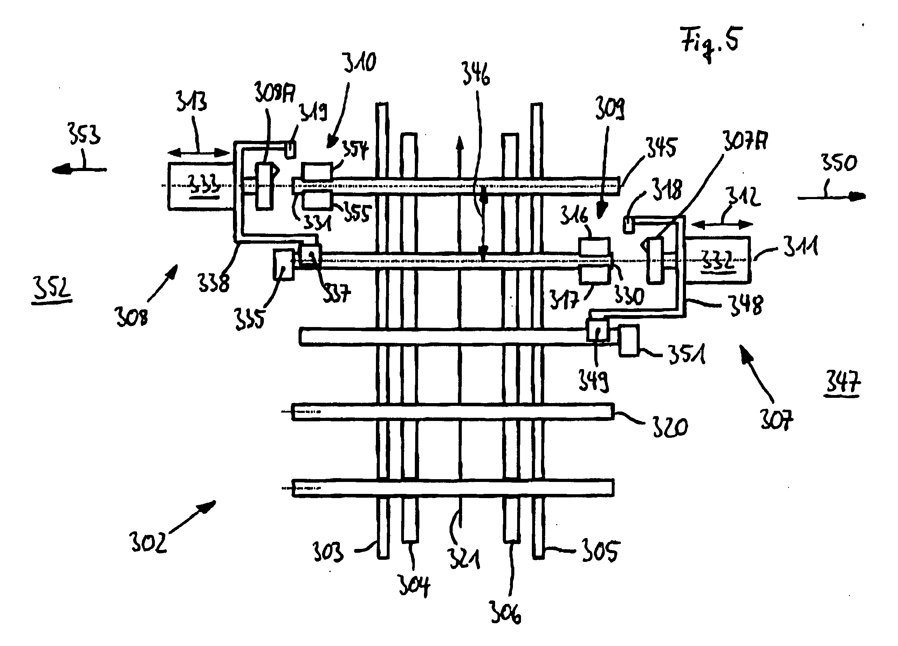

Die in den Figuren 4 und 5 gezeigte Fasmaschine 301 weist einen Quertransport 302 mit Fördermitteln 303, 304, 305 und 306 auf, mit welchem Werkstücke 320 in Transportrichtung 321 einer ersten Faseinrichtung 307 und einer zweiten Faseinrichtung 308 zugeführt werden. Im Gegensatz zu den Fasmaschinen 101 und 201 der vorhergegangenen Ausführungsbeispiele sind bei der Fasmaschine 301 die Faseinrichtungen 307 und 308 auf unterschiedlichen Bearbeitungsachsen 311, 345 angeordnet. So befindet sich die erste Faseinrichtung 307 auf einer ersten Bearbeitungsachse 311, während sich die zweite Faseinrichtung 308 auf einer zweiten Bearbeitungsachse 345 befindet. Die erste Bearbeitungsachse 311 und die zweite Bearbeitungsachse 345 sind um einen Abstand 346 voneinander beabstandet in Transportrichtung 321 an der Fasmaschine 301 angeordnet.

Die erste Faseinrichtung 307 ist in diesem Ausführungsbeispiel auf der rechten Seite 347 des Quertransportes 302 angeordnet und dafür vorgesehen, ein erstes, in diesem Fall ein rechtes Werkstückende 330, mit einer Fase zu versehen. Hierzu weist die erste Faseinrichtung 307 ein Faswerkzeug 307A auf und ist mittels eines Faseinrichtungsschlittens 332 entlang der ersten Bearbeitungsachse 311 gemäß der Bewegungsrichtungen 312 hin und her verlagerbar. An der ersten Faseinrichtung 307 ist eine Messeinrichtung 318 vorgesehen, um insbesondere das Werkstückende 330 zu lokalisieren. Darüber hinaus ist an der Faseinrichtung 307 mittels einer Halterung 348 ein Werkstückgreifer 349 zum Greifen eines Werkstückes 320 angeordnet. Mittels des Werkstückgreifers 349 wird ein damit ergriffenes Werkstück 320 während einer Rückstellbewegung 350 der ersten Faseinrichtung 307 gegen einen ersten Anschlag 351 bewegt (siehe Figur 5).

Die erste Faseinrichtung 307 ist von dem gefasten Ende 330 gemäß der Rückstellbewegung 350 weggefahren (Figur 5). Da der Werkstückgreifer 349 über die Halterung 348 mit der ersten Faseinrichtung 307 konstruktiv verbunden ist, ist der Werkstückgreifer 349 ebenfalls um die Strecke gemäß der Rückstellbewegung 350 der ersten Faseinrichtung 307 verfahren worden.

Damit das Werkstück 320 während des Fasens sicher auf der Bearbeitungsachse 311 festgelegt ist, ist an der Bearbeitungsachse 311 im Bereich der ersten Faseinrichtung 307 eine erste Klemmeinrichtung 309 mit einer ersten Klemmbacke 316 und einer zweiten Klemmbacke 317 vorgesehen.

Um das zweite Werkstückende 331, welches dem ersten, rechten Werkstückende 330 gegenüberliegt, mit einer Fase zu versehen, ist an der linken Seite 352 des Quertransportes 302 eine zweite Faseinrichtung 308 vorgesehen. Auch die zweite Faseinrichtung 308 verfügt über ein Faswerkzeug 308A und ist mittels eines Faseinrichtungsschlittens 333 gemäß der Bewegungsrichtungen 313 entlang der zweiten Bearbeitungsachse 345 translatorisch hin und her bewegbar angeordnet.

Wie weiter aus der Figur 4 ersichtlich, ist die zweite Faseinrichtung 308 derart an das zweite Werkstückende 331 herangefahren, dass das Faswerkzeug 308A dieses bearbeitet. Ein Werkstückgreifer 337, der über eine Halterung 338 mit der zweiten Faseinrichtung 308 verbunden ist, greift das zweite Werkstückende 331 des Werkstückes 320, welches sich auf der Bearbeitungsachse 311 befindet und dort von der ersten Faseinrichtung 307 bearbeitet wird bzw. wurde.

Der Werkstückgreifer 337 greift das Werkstück 320, welches sich auf der Bearbeitungsachse 311 befindet und zieht dieses während einer Rückstellbewegung 353 gegen den zweiten Anschlag 335, sobald das Werkstück 320 auf der Bearbeitungsachse 311 von dem ersten Faswerkzeug 307A fertig bearbeitet ist und die Klemmeinrichtung 309 das Werkstück 320 auf der Bearbeitungsachse 311 freigegeben hat. Somit wird das fertig bearbeitete Werkstück 320 mittels der Rückstellbewegung 353 der zweiten Faseinrichtung 308 auf der Bearbeitungsachse 311 für den zweiten Bearbeitungsschritt mit dem Faswerkzeug 308A bereits vorteilhaft vorpositioniert.

Um das zu bearbeitende Werkstück 320, welches auf der Bearbeitungsachse 345 angeordnet ist, festzuklemmen, ist im Bereich der Faseinrichtung 308 eine Klemmeinrichtung 310 vorgesehen, welche mit ihren Klemmbacken 354 und 355 das auf der Bearbeitungsachse 345 angeordnete und noch zu bearbeitende Werkstück 320 auf der Bearbeitungsachse 345 festklemmt.

Damit die zweite Faseinrichtung 308 gegenüber dem zu bearbeitenden Werkstück 320 auf der Bearbeitungsachse 345 korrekt ausgerichtet werden kann, ist an der zweiten Faseinrichtung 308 zusätzlich eine Messeinrichtung 319 angeordnet, welche die Position des zweiten Werkstückendes 331, die Position des Werkzeuges 308A und gegebenenfalls die Position der Klemmeinrichtung 310 feststellt.

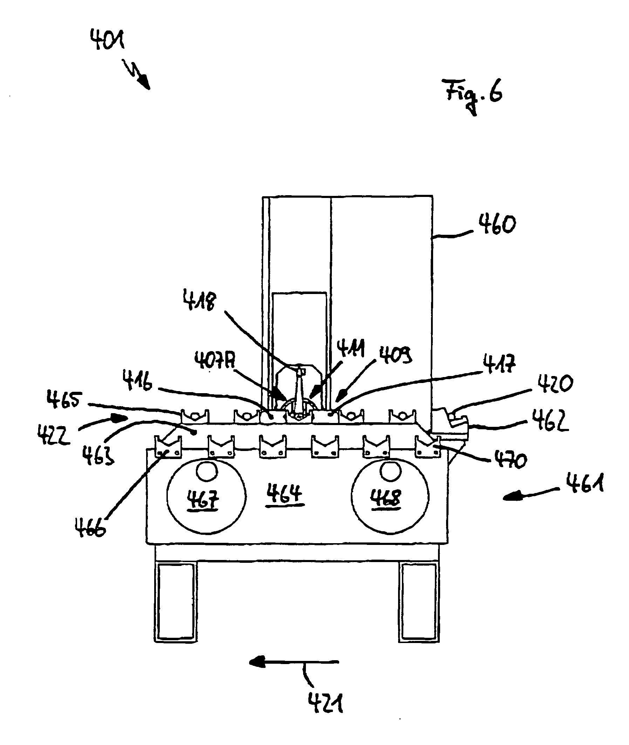

Die in den Figuren 6 bis 10 illustrierte Fasmaschine 401 weist ein Gestell 460 auf, an welchem ein Hub-Schritt-Förderer 461 als Quertransport, ein Faswerkzeug 407A, eine Klemmeinrichtung 409 mit einer ersten Klemmbacke 416 und einer zweiten Klemmbacke 417, eine Messeinrichtung 418 sowie eine Vorhalteeinrichtung 462 für Werkstücke 420 angeordnet ist. Diese Anordnung unterscheidet sich von den Anordnungen nach den Figuren 1 bis 5 mithin im Wesentlichen dadurch, dass lediglich ein Faswerkzeug 407A vorgesehen ist. Es versteht sich, dass diese Anordnung um ein weiteres Faswerkzeug mit Klemmeinrichtung und Messeinrichtung erweitert werden kann, wobei diese gegebenenfalls auch auf einer gemeinsamen Bearbeitungsachse angeordnet sein können. Im Übrigen ist die Zahl der Werkstückaufnahmen 422 abweichend.

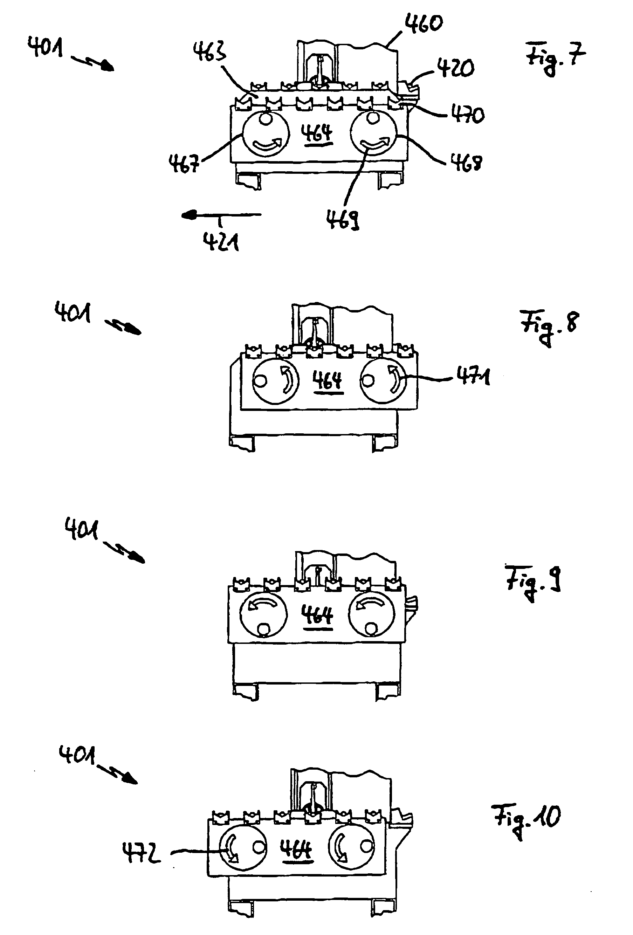

Der Hub-Schritt-Förderer 461 weist bei diesem Ausführungsbeispiel einen ersten Stator 463 sowie einen damit korrespondierenden ersten Aktor 464 auf. Der erste Stator 463 weist eine Vielzahl an statischen Werkstückaufnahmen 465 auf, wohin hingegen der erste Aktor 464 eine Vielzahl an dynamischen Werkstückaufnahmen 466 aufweist. Der Aktor 464 ist in diesem Ausführungsbeispiel an einer ersten Exenterscheibe 467 und an einer zweiten Exenterscheibe 468 gelagert, so dass er bei einem Bewegungszyklus (siehe Figuren 7 bis 10) gemäß Pfeilrichtung 469 auf einer Kreisbahn umläuft, dabei greift eine vordere dynamische Werkzeugaufnahme 470 ein einzelnes Werkstück 420 aus der Vorhalteeinrichtung 462 und bewegt dieses Werkstück 420 in Transportrichtung 421 vorwärts. Beim Ergreifen des Werkstücks 420 aus der Vorhalteeinrichtung 462 greifen die übrigen dynamischen Werkzeughalter 466 die in den statischen Werkzeugaufnahmen 465 abgelegten Werkstücke 420, heben diese an (siehe Figur 9) und befördern diese gemäß Transportrichtung 421 vorwärts. Die Werkstücke 420 werden also in einer Aufwärtsbewegung 471 des Aktors 464 aus den statischen Werkstückaufnahmen 465 herausgehoben, vorwärts bewegt und während einer Abwärtsbewegung 472 versetzt, von den dynamischen Werkzeugaufnahmen 466 wieder an die statischen Werkzeugaufnahmen 465 übergeben. Hierdurch wird jedes Werkstück 420 sukzessiv von der vorderen dynamischen Werkzeugaufnahme 470 aus der Vorhalteeinrichtung 462 aufgenommen, vorwärts transportiert, in eine statische Werkzeugaufnahme 465 abgelegt, um anschließend wieder von einer dynamischen Werkzeugaufnahme 466 erfasst zu werden und in eine weitere statische Werkzeugaufnahme 465 nach einem Bewegungszyklus der dynamischen Werkzeugaufnahmen 466 abgelegt zu werden.

Bei dieser Anordnung ist, wie aus den Figuren 6 bis 10 ersichtlich, der Emitter einer optischen Messeinrichtung ungefähr 450 mm über der Bearbeitungsachse 411 angeordnet. Unter der Bearbeitungsachse 411 ist in entsprechendem Abstand eine Sensoranordnung aus zwei parallel zur Bearbeitungsachse angeordneten Sensoren angeordnet, wobei der Emitter mit einem Lichtkegel, wie aus den Figuren ersichtlich, in Richtung auf diese Sensoren strahlt. Beide Bestandteile der Messeinrichtung sind bei diesem Ausführungsbeispiel an dem Faswerkzeug befestigt, welches zunächst schnell auf das Werkstückende zu bewegt wird, bis der erste Sensor ein Unterbrechung des Lichtweges feststellt. Anschließend wird das Faswerkzeug abgebremst und erheblich langsamer weiter bewegt, bis auch der zweite Sensor kein Licht mehr empfängt. Insofern kann auch bei dieser Anordnung das Werkstückende hochgenau gemessen und von dem Faswerkzeug erfasst werden, wobei letztlich die Klemmeinrichtung nicht entlang der Bearbeitungsachse 411 verlagert wird.

Es versteht sich, dass das Vermessen und Positionieren der Werkstücke, Klemmeinrichtungen und Faswerkzeuge in beiden Ausführungsbeispielen auch jeweils bei dem anderen der beiden Ausführungsbeispiele zur Anwendung kommen kann.

Bei beiden Ausführungsbeispielen sind klemmen die Klemmeinrichtungen mit einer Klemmkrafthauptrichtung, deren eine Komponente senkrecht zu einer durch eine Zu- und Abfuhrrichtung und die Bearbeitungsachse 411 aufgespannten Ebene aufweist. Die Zu- und Abfuhrrichtung für die Werkstücke ist hierbei in Wesentlichen vertikal, wie unmittel bar aus den Bewegungsabläufen der Aktoren in Bezug auf die Statoren ersichtlich ist.

### Bezugsziffernliste:

- 1: Fasmaschine
- 2: Quertransport
- 3: erstes linkes Fördermittel
- 4: zweites linkes Fördermittel
- 5: erstes rechtes Fördermittel
- 6: zweites rechtes Fördermittel
- 7: erste Faseinrichtung
- 7A: Faswerkzeug der ersten Faseinrichtung
- 8: zweite Faseinrichtung
- 8A: Faswerkzeug der zweiten Faseinrichtung
- 9: erste Klemmeinrichtung
- 10: zweite Klemmeinrichtung
- 11: Bearbeitungsachse
- 12: Bewegungsrichtungen der ersten Faseinrichtung
- 13: Bewegungsrichtungen der zweiten Faseinrichtung
- 14: Bewegungsrichtungen der ersten Klemmeinrichtung
- 15: Bewegungsrichtungen der zweiten Klemmeinrichtung
- 16: erste Klemmbacke
- 17: zweite Klemmbacke
- 18: erste Messeinrichtung
- 19: zweite Messeinrichtung
- 20: Werkstücke
- 21: Transportrichtung
- 22: Werkstückaufnahmen
- 101: Fasmaschine
- 102: Quertransport
- 103: erstes linkes Fördermittel
- 104: zweites linkes Fördermittel
- 105: erstes rechtes Fördermittel
- 106: zweites rechtes Fördermittel
- 107: erste Faseinrichtung
- 107A: Faswerkzeug der ersten Faseinrichtung
- 108: zweite Faseinrichtung
- 108A: Faswerkzeug der zweiten Faseinrichtung
- 109: erste Klemmeinrichtung
- 110: zweite Klemmeinrichtung
- 111: Bearbeitungsachse
- 112: Bewegungsrichtungen der ersten Faseinrichtung
- 113: Bewegungsrichtungen der zweiten Faseinrichtung
- 114: Bewegungsrichtungen der ersten Klemmeinrichtung
- 115: Bewegungsrichtungen der zweiten Klemmeinrichtung
- 116: erste Klemmbacken
- 117: zweite Klemmbacken
- 118: erste Messeinrichtung
- 119: zweite Messeinrichtung
- 120: Werkstücke
- 121: Transportrichtung
- 122: Werkstückaufnahmen
- 130: erstes Werkstückende
- 131: zweites Werkstückende
- 132: erster Faseinrichtungsschlitten
- 133: zweiter Faseinrichtungsschlitten
- 134: erste Exenterscheibe
- 135: zweite Exenterscheibe
- 136: Pfeilrichtung
- 137: vordere dynamische Werkstückaufnahme
- 138: Aufwärtsbewegung
- 139: Abwärtsbewegung
- 201: Fasmaschine
- 202: Quertransport
- 203: erstes linkes Fördermittel
- 204: zweites linkes Fördermittel
- 205: erstes rechtes Fördermittel
- 206: zweites rechtes Fördermittel
- 207: erste Faseinrichtung
- 207A: Faswerkzeug der ersten Faseinrichtung
- 208: zweite Faseinrichtung
- 208A: Faswerkzeug der zweiten Faseinrichtung
- 209: erste Klemmeinrichtung
- 210: zweite Klemmeinrichtung
- 211: Bearbeitungsachse
- 212: Bewegungsrichtungen der ersten Faseinrichtung
- 213: Bewegungsrichtungen der zweiten Faseinrichtung
- 216: erste Klemmbacken
- 217: zweite Klemmbacken
- 220: Werkstücke
- 221: Transportrichtung
- 230: erstes Werkstückende
- 231: zweites Werkstückende
- 232: erster Faseinrichtungsschlitten
- 233: zweiter Faseinrichtungsschlitten
- 234: Abstand
- 235: Anschlag
- 236: Vorpositioniereinrichtung
- 237: Werkstückgreifer
- 238: Halterung
- 239: Rückstellbewegung
- 240: Umkehrposition
- 241: Fasposition
- 301: Fasmaschine
- 302: Quertransport
- 303: erstes linkes Fördermittel
- 304: zweites linkes Fördermittel
- 305: erstes rechtes Fördermittel
- 306: zweites rechtes Fördermittel
- 307: erste Faseinrichtung
- 307A: Faswerkzeug der ersten Faseinrichtung
- 308: zweite Faseinrichtung
- 308A: Faswerkzeug der zweiten Faseinrichtung
- 309: erste Klemmeinrichtung
- 310: zweite Klemmeinrichtung
- 311: Bearbeitungsachse
- 312: Bewegungsrichtungen der ersten Faseinrichtung
- 318: erste Messeinrichtung
- 319: zweite Messeinrichtung
- 320: Werkstücke
- 321: Transportrichtung
- 330: erstes Werkstückende
- 331: zweites Werkstückende
- 332: erster Faseinrichtungsschlitten
- 333: zweiter Faseinrichtungsschlitten
- 335: zweiter Anschlag
- 337: Werkstückgreifer
- 345: zweite Bearbeitungsachse
- 346: Abstand
- 347: rechte Seite
- 348: Haltearm
- 349: Werkstückgreifer
- 350: Rückstellbewegung
- 351 1: erster Anschlag
- 352: linke Seite
- 353: Rückstellbewegung
- 354: erste Klemmbacke
- 355: zweite Klemmbacke
- 401: Fasmaschine
- 407A: Faswerkzeug
- 409: Klemmeinrichtung
- 411: Bearbeitungsachse
- 416: erste Klemmbacke
- 417: zweite Klemmbacke
- 418: Messeinrichtung
- 420: Werkstücke
- 421: Transportrichtung
- 460: Gestell
- 461: Hub-Schritt-Förderer
- 462: Vorhalteeinrichtung
- 463: erster Stator
- 464: zweiter Stator
- 465: statische Werkstückaufnahmen
- 466: dynamische Werkstückaufnahmen
- 467: erste Exzenterscheibe
- 468: zweite Exzenterscheibe
- 469: Pfeilrichtung
- 470: fordere dynamische Werkzeugaufnahme
- 471: Abwärtsbewegung
- 472: Abwärtsbewegung

## Patentansprüche

1. Fasmaschine mit wenigstens einer Faseinrichtung (7, 8) zum Fasen von rohr- oder stangenartigen Werkstücken (20) und mit einer Klemmeinrichtung (9, 10) zum Positionieren eines Werkstückes (20) in einer Bearbeitungsposition, ***dadurch gekennzeichnet, dass*** die Klemmeinrichtung (9, 10) Mittel zum Verlagern des Werkstückes (20) entlang einer Bearbeitungsachse (11) jeweils in Abhängigkeit von Längen- oder Lagetoleranzen des zugeführten Werkstückes (20) sowie eine Messeinrichtung (18, 19) zur Ermittlung der Länge und/oder Lage der Werkstücke (20) aufweist, und dass die Faseinrichtung (7, 8) parallel zu der Bearbeitungsachse (11) verlagerbar an der Fasmaschine (1) angeordnet ist.

2. Fasmaschine nach Anspruch 1, ***dadurch gekennzeichnet dass*** die Klemmeinrichtung (9, 10) axial verlagerbare Klemmbacken (16, 17) aufweist.

3. Fasmaschine nach Anspruch 1 oder 2, ***gekennzeichnet durch*** einen axial verlagerbaren Anschlag (235; 335, 351), der insbesondere axial federnd ausgebildet ist.

4. Fasverfahren nach Anspruch 3, ***dadurch gekennzeichnet, dass*** der Anschlag an einem Faswerkzeug, vorzugsweise auf einer Rotationsachse des Faswerkzeugs, angeordnet ist.

5. Fasmaschine nach einem der Ansprüche 1 bis 4, ***gekennzeichnet durch*** eine Klemmeinrichtung (409) mit einer Klemmkrafthauptrichtung zum Klemmen der Werkstücke (420) während des Fasens, bei welcher die Klemmkrafthauptrichtung eine Komponente senkrecht zu einer **durch** eine Förderrichtung und die Bearbeitungsachse (411) aufgespannten Ebene aufweist.

6. Fasmaschine nach einem der Ansprüche 1 bis 5, ***gekennzeichnet durch*** eine Vorpositioniereinrichtung (236) zum Vorpositionieren der Werkstücke (220).

7. Fasverfahren nach Anspruch 6, ***dadurch gekennzeichnet, dass*** die Vorpositioniereinrichtung (236) an einem Linearantrieb der Faseinrichtung (208) geführt angeordnet ist.

8. Fasmaschine nach Anspruch 6 oder 7, ***dadurch gekennzeichnet, dass*** die Vorpositioniereinrichtung (236) an der Faseinrichtung (208) unmittelbar angeordnet ist.

9. Fasmaschine nach einem der Ansprüche 6 bis 8, ***dadurch gekennzeichnet, dass*** die Vorpositioniereinrichtung (236) derart mit einer Faseinrichtungsführung (233) körperlich gekoppelt ist, dass die Vorpositioniereinrichtung (236) einer translatorischen Bewegung (213) der Faseinrichtung (208) entlang der Bearbeitungsachse (211) folgt.

10. Fasmaschine nach einem der Ansprüche 6 bis 9, ***dadurch gekennzeichnet, dass*** die Vorpositioniereinrichtung (236) einen axial verlagerbaren, insbesondere federnd gelagerten, Anschlag umfasst.

11. Fasmaschine nach einem der Ansprüche 6 bis 10, ***dadurch gekennzeichnet, dass*** die Vorpositioniereinrichtung (236) einen axialen Vortrieb aufweist, der mit einem Mitnehmer für ein zu positionierendes Werkstück wirkverbunden ist, wobei der Mitnehmer bei Erreichen eines Anschlages entweder von dem Vortrieb getrennt wird oder das Werkstück freigibt.

12. Verfahren zum Fasen von rohr- oder stangenartigen Werkstücken (20) mittels einer Faseinrichtung, (1) nach einem der Ansprüche 1 bis 11, ***dadurch gekennzeichnet, dass*** das Werkstück vor dem Fasen, bei welchem die Faseinrichtung (7, 8) parallel zu einer Bearbeitungsachse (11) verlagert wird, entlang einer Bearbeitungsachse (11) jeweils in Abhängigkeit von Längen- oder Lagetoleranzen des zugeführten Werkstückes (20) verlagert wird.

13. Fasverfahren nach Anspruch 12, ***dadurch gekennzeichnet, dass*** das Werkstück (20) zunächst in einen Bearbeitungsbereich transportiert und dann entlang der Bearbeitungsachse (11) verlagert wird.

14. Fasverfahren nach Anspruch 12 oder 13, ***dadurch gekennzeichnet, dass*** wenigstens eine Klemmeinrichtung (9, 10) vor einem Klemmen und/oder während des Klemmens eines der Werkstücke (20) in Abhängigkeit von der Länge und/oder der Lage des jeweiligen Werkstücks (20) bzw. von der Länge und/oder der Lage der Enden (30, 31) des jeweiligen Werkstücks (20) verfahren und positioniert wird.

15. Fasverfahren nach einem der Ansprüche 12 bis 14, ***dadurch gekennzeichnet, dass*** zunächst das Werkstück (20) in einen Bearbeitungsbereich transportiert, dann mittels einer Klemmeinrichtung (9, 10) erfasst und anschließend entlang der Bearbeitungsachse (11) verlagert wird.

16. Fasverfahren nach Anspruch 15, ***dadurch gekennzeichnet, dass*** wenigstens eine Klemmeinrichtung (9, 10) das Werkstück (20) zunächst achsstabil aber axial verlagerbar erfasst und erst nach einer axialen Ausrichtung das Werkstück (20) klemmt.

17. Fasverfahren nach einem der Ansprüche 12 bis 16, ***dadurch gekennzeichnet, dass*** das Werkstück (20) bis zu einem axialen Anschlag (235; 335, 351) verlagert wird.

18. Fasverfahren nach Anspruch 17, ***dadurch gekennzeichnet, dass*** der Anschlag (235; 335, 351) axial verlagerbar, insbesondere axial federnd, ausgebildet ist.

19. Fasverfahren nach Anspruch 18, ***dadurch gekennzeichnet, dass*** der Anschlag (235; 335, 351) an einem Faswerkzeug, vorzugsweise auf einer Rotationsachse des Faswerkzeugs, angeordnet ist.

20. Fasverfahren nach einem der Ansprüche 12 bis 19, ***dadurch gekennzeichnet, dass*** die Werkstücke (20) für das Fasen vorpositioniert werden, wobei die Werkstücke sukzessiv mittels einer Vorpositioniereinrichtung gegriffen und verlagert werden und hierbei eine Haftreibung zwischen der Vorpositioniereinrichtung und einem Werkstück in eine Gleitreibung übergeht, sobald das Werkstück vorpositioniert wurde.

21. Fasverfahren nach einem der Ansprüche 12 bis 20, ***dadurch gekennzeichnet, dass*** die Werkstücke (20) während eines Vorpositionierens mit einer konstanten Kraft gegriffen werden.

## Claims

1. A beveling machine with at least one beveling device (7, 8) for beveling tubular or rod-shaped workpieces (20) and with a clamping device (9, 10) for positioning a workpiece (20) in a processing position, ***characterized in that*** the clamping device (9, 10) features means for respectively displacing the workpiece (20) along a processing axis (11) in dependence on length or position tolerances of the supplied workpiece (20), as well as a measuring device (18, 19) for determining the length and/or position of the workpieces (20), and **in that** the beveling device (7, 8) is arranged on the beveling machine (1) such that it can be displaced parallel to the processing axis (11).

2. The beveling machine according to Claim 1, ***characterized in that*** the clamping device (9, 10) features axially displaceable clamping jaws (16, 17).

3. The beveling machine according to Claim 1 or 2, ***characterized in*** an axially displaceable limit stop (235; 335, 351) that is realized, in particular, in an axially springable fashion.

4. The beveling method [sic] according to Claim 3, ***characterized in that*** the limit stop is arranged on a beveling tool, preferably on a rotational axis of the beveling tool.

5. The beveling machine according to one of Claims 1 to 4, ***characterized in*** a clamping device (409) with a principal direction of clamping force for clamping the workpieces (420) during beveling, wherein the principal direction of clamping force features a component perpendicular to a plane defined by the transport direction and the processing axis (411).

6. The beveling machine according to one of Claims 1 to 5, ***characterized in*** a pre-positioning device (236) for pre-positioning the workpieces (220).

7. The beveling method [sic] according to Claim 6, ***characterized in that*** the pre-positioning device (236) is arranged such that it is guided on a linear drive of the beveling device (208).

8. The beveling machine according to Claim 6 or 7, ***characterized in that*** the pre-positioning device (236) is arranged directly on the beveling device (208).

9. The beveling machine according to one of Claims 6 to 8, ***characterized in that*** the pre-positioning device (236) is physically coupled to the beveling device guide (233) in such a way that the pre-positioning device (236) follows a translatory motion (213) of the beveling device (208) along the processing axis (211).

10. The beveling machine according to one of Claims 6 to 9, ***characterized in that*** the pre-positioning device (236) comprises an axially displaceable limit stop that is supported, in particular, in a springable fashion.

11. The beveling machine according to one of Claims 6 to 10, ***characterized in that*** the pre-positioning device (236) features an axial propulsion that is functionally connected to a driving element for a workpiece to be positioned, wherein the driving element is either separated from the propulsion or releases the workpiece when it reaches a limit stop.

12. A method for beveling tubular or rod-shaped workpieces (20) by means of a beveling device (1) according to one of Claims 1 to 11, ***characterized in that*** the workpiece is respectively displaced along a processing axis (11) in dependence on length or position tolerances of the delivered workpiece (20) prior to the beveling process, during which the beveling device (7, 8) is displaced parallel to the processing axis (11).

13. The beveling method according to Claim 12, ***characterized in that*** the workpiece (20) is initially transported into a processing region and then displaced along the processing axis (11).

14. The beveling method according to Claim 12 or 13, ***characterized in that*** at least one clamping device (9, 10) is displaced and positioned prior to clamping and/or while clamping one of the workpieces (20) in dependence on the length and/or the position of the respective workpiece (20) or on the length and/or the position of the ends (30, 31) of the respective workpiece (20).

15. The beveling method according to one of Claims 12 to 14, ***characterized in that*** the workpiece (20) is initially transported into a processing region, then taken hold of by means of a clamping device (9, 10) and subsequently displaced along the processing axis (11).

16. The beveling method according to Claim 15, ***characterized in that*** at least one clamping device (9, 10) initially takes hold of the workpiece (20) in a stable fashion referred to the axis, however, such that it is axially displaceable and only clamps the workpiece (20) after an axial alignment.

17. The beveling method according to one of Claims 12 to 16, ***characterized in that*** the workpiece (20) is displaced up to an axial limit stop (235; 335, 351).

18. The beveling method according to Claim 17, ***characterized in that*** the limit stop (235; 335, 351) is realized in an axially displaceable fashion, particularly in an axially springable fashion.

19. The beveling method according to Claim 18, ***characterized in that*** the limit stop (235; 335, 351) is arranged on a beveling tool, preferably on a rotational axis of the beveling tool.

20. The beveling method according to one of Claims 12 to 19, ***characterized in that*** the workpieces (20) are pre-positioned for the beveling process, wherein the workpieces are successively gripped by means of a pre-positioning device, and wherein static friction between the pre-positioning device and a workpiece transforms into kinetic friction as soon as the workpiece was pre-positioned.

21. The beveling method according to one of Claims 12 to 20, ***characterized in that*** the workpieces (20) are gripped with a constant force during a pre-positioning process.

## Revendications

1. Machine à chanfreiner comportant au moins un dispositif de chanfreinage (7,8) pour chanfreiner des pièces (20) tubulaires ou en forme de barres et comportant un dispositif de serrage (9,10) pour positionner une pièce (20) dans une position de traitement, **caractérisée en ce que** le dispositif de serrage (9,10) présente des moyens pour déplacer la pièce (20) le long d'un axe de traitement (11) respectivement en fonction des tolérances de longueur ou de positionnement de la pièce (20) introduite ainsi qu'un dispositif de mesure (18,19) pour déterminer la longueur et/ou la position de la pièce (20), et **en ce que** le dispositif de chanfreinage (7,8) est disposé parallèlement à l'axe de traitement (11) de manière déplaçable sur la machine à chanfreiner (1).

2. Machine à chanfreiner selon la revendication 1, **caractérisée en ce que** le dispositif de serrage (9,10) présente des mâchoires de serrage (16,17) déplaçables axialement.

3. Machine à chanfreiner selon la revendication 1 ou 2, **caractérisée par** une butée (235 ;335,351) déplaçable axialement, qui est notamment configurée de manière à faire ressort axialement.

4. Machine à chanfreiner selon la revendication 3, **caractérisée en ce que** la butée est disposée sur un outil de chanfreinage, de préférence sur un axe de rotation de l'outil de chanfreinage.

5. Machine à chanfreiner selon une des revendications 1 à 4, **caractérisée par** un dispositif de serrage (409) comportant une direction principale de force de serrage pour serrer les pièces (420) pendant le chanfreinage, dans laquelle la direction principale de force de serrage présente un composant perpendiculaire à un plan défini à travers un dispositif de transport et l'axe de traitement (411).

6. Machine à chanfreiner selon une des revendications 1 à 5, **caractérisée par** un dispositif de pré-positionnement (236) pour pré-positionner les pièces (220).

7. Machine à chanfreiner selon la revendication 6, **caractérisée en ce que** le dispositif de pré-positionnement (236) est disposé en étant guidé sur un entraînement linéaire du dispositif de chanfreinage (208).

8. Machine à chanfreiner selon la revendication 6 ou 7, **caractérisée en ce que** le dispositif de pré-positionnement (236) est disposé directement sur le dispositif de chanfreinage (208).

9. Machine à chanfreiner selon une des revendications 6 à 8, **caractérisée en ce que** le dispositif de pré-positionnement (236) est couplé physiquement à un guidage de dispositif de chanfreinage (233) de telle sorte que le dispositif de pré-positionnement (236) suive un mouvement de translation (213) du dispositif de chanfreinage (208) le long de l'axe de traitement (211).

10. Machine à chanfreiner selon une des revendications 6 à 9, **caractérisée en ce que** le dispositif de pré-positionnement (236) comprend une butée déplaçable axialement, notamment positionnée de manière à faire ressort.

11. Machine à chanfreiner selon une des revendications 6 à 10, **caractérisée en ce que** le dispositif de pré-positionnement (236) présente une propulsion axiale, qui est reliée opérationnellement à un doigt d'entraînement pour une pièce à positionner, dans laquelle le doigt d'entraînement lorsqu'il atteint une butée soit est séparé de la propulsion, soit libère la pièce.

12. Procédé de chanfreinage pour pièces (20) tubulaires ou en forme de barres au moyen d'un dispositif de chanfreinage (1) selon une des revendications 1 à 11, **caractérisé en ce que** la pièce est déplacée avant le chanfreinage, dans lequel le dispositif de chanfreinage (7,8) est déplacé parallèlement à un axe de traitement (11), est déplacé le long d'un axe de traitement (11) respectivement en fonction des tolérances de longueur ou de positionnement de la pièce (20) introduite.

13. Procédé de chanfreinage selon la revendication 12, **caractérisé en ce que** la pièce (20) est ensuite transportée dans une zone de traitement et est ensuite déplacée le long de l'axe de traitement (11).

14. Procédé de chanfreinage selon la revendication 12 ou 13, **caractérisé en ce que** au moins un dispositif de serrage (9,10) est déplacé et positionné avant un serrage et/ou pendant le serrage d'une des pièces (20) en fonction de la longueur et/ou de la position de la pièce (20) respective, respectivement de la longueur et/ou de la position des extrémités (30,31) de la pièce respective (20).

15. Procédé de chanfreinage selon une des revendications 12 à 14, **caractérisé en ce que** la pièce (20) est tout d'abord transportée dans une zone de traitement, puis saisie au moyen d'un dispositif de serrage (9,10) et enfin déplacée le long de l'axe de traitement (11).

16. Procédé de chanfreinage selon la revendication 15, **caractérisé en ce que** au moins un dispositif de serrage (9,10) saisit la pièce (20) tout d'abord sur un axe stable mais déplaçable axialement et serre la pièce (20) seulement après un alignement axial.

17. Procédé de chanfreinage selon une des revendications 12 à 16, **caractérisé en ce que** la pièce (20) est déplacée jusqu'à une butée axiale (235,335,351).

18. Procédé de chanfreinage selon la revendication 17, **caractérisé en ce que** la butée (235 ;335,351) est configuré de manière déplaçable axialement, notamment de manière à faire ressort axialement.

19. Procédé de chanfreinage selon la revendication 18, **caractérisé en ce que** la butée (235 ;335,351) est disposée sur un outil de chanfreinage, de préférence sur un axe de rotation de l'outil de chanfreinage.

20. Procédé de chanfreinage selon une des revendications 12 à 19, **caractérisé en ce que** les pièces (20) sont pré-positionnées en vue du chanfreinage, dans lequel les pièces sont saisies et déplacées successivement au moyen d'un dispositif de pré-positionnement, ce qui fait passer une friction statique entre le dispositif de pré-positionnement et une pièce en une friction dynamique, dès que la pièce a été pré-positionnée.

21. Procédé de chanfreinage selon une des revendications 12 à 20, **caractérisé en ce que** les pièces (20) sont saisies avec une force constante pendant un pré-positionnement.
